# EUROPEAN PATENT SPECIFICATION

(11) **EP 3 023 856 B1**
(45) Date of publication and mention of the grant of the patent: **08.08.2018**
(21) Application number: 15001731.7
(22) Date of filing: 11.06.2015
(51) Int. Cl.: G06F 3/041, G06F 3/0484, G06F 1/16, G06F 3/0486, G06F 3/0488

(54) **MOBILE TERMINAL AND METHOD FOR CONTROLLING THE SAME**
TRAGBARES ENDGERÄT UND VERFAHREN ZUR STEUERUNG DAVON
TERMINAL MOBILE ET SON PROCÉDÉ DE COMMANDE

(30) Priority: 24.11.2014 KR 20140164722
(43) Date of publication of application: 25.05.2016
(73) Proprietor: LG Electronics Inc., Yeongdeungpo-gu Seoul 150-721 (KR)
(72) Inventor: EIM, Sanghyun, Seoul 137-893 (KR); LEE, Eunsang, Seoul 137-893 (KR); JOUNG, Wonseok, Seoul 137-893 (KR); IM, Hyeongjin, Seoul 137-893 (KR); LEE, Jaehee, Seoul 137-893 (KR); JO, Juhee, Seoul 137-893 (KR); CHO, Jungsun, Seoul 137-893 (KR)
(74) Representative: Beyer, Andreas

(56) References cited:
- US-A1- 2010 117 975
- US-A1- 2012 221 966
- US-A1- 2013 300 697
- US-A1- 2014 164 966

## Description

### BACKGROUND OF THE INVENTION

### 1. Field of the Invention

The present invention relates to a mobile terminal having a flexible display unit foldable or bendable at least partially, and a method for controlling the same.

### 2. Description of the Conventional Art

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions may include data and voice communications, capturing images and video through a camera, recording audio, playing music files through a speaker system, and displaying images and video on a display unit. Some mobile terminals additionally provide functions such as playing an electronic game, or executing a function of multimedia players. Especially, recent mobile terminals may receive multicast signal for providing visual content such as broadcasts, videos, or television programs.

As it becomes multifunctional, a mobile terminal can be allowed to capture still images or moving images, play music or video files, play games, receive broadcast and the like, so as to be implemented as an integrated multimedia player.

Efforts are ongoing to support and increase the functionality of mobile terminals. Such efforts include software and hardware improvements, as well as changes and improvements in the structural components.

Such a portable electronic appliance is evolved to have various types of designs, and in order to meet user's needs desiring more new and various types of designs, efforts have been made to develop the mobile terminal in various types. The new types include structural changes and improvements. As one of such structural changes and improvements, the mobile terminal having a flexible display unit which is foldable or bendable at least partially has been highlighted.

As the mobile terminal having a foldable or bendable display unit is highlighted, necessity for a user-friendly interface has emerged as a major interest. That is, according to features of the mobile terminal having a foldable or bendable display unit, it is possible to create a new user interface region which has not existed or which had a limitation in application in the past.

US 2010/0117975 A1 relates to a mobile terminal including a body and a display module, which is flexible and is capable of receiving a touch input, such as a folding screen-type mobile terminal. The flexible display is fixed onto the body and is folded back and forth on itself so as to have a plurality of folds. Different operation screens may be displayed on the respective folds of the flexible display. When the flexible display is completely unfolded, one of the operation screens may be displayed on the entire flexible display, while the user may view each of the different operation screens by slightly opening the flexible display.

US 2014/0164966 A1 relates to a method of controlling a display device including a touch screen for a plurality of sub spaces on the touch screen. The user may input a flick gesture in a predetermined direction as a page switching gesture. Furthermore, the user may drag visualized data to an application.

### SUMMARY OF THE INVENTION

It is an object of the present invention to provide a mobile terminal and method of controlling the same, which improves user convenience when displaying information on a foldable display. The invention is as set out in the independent claims. According to an aspect of the present disclosure, there is provided a mobile terminal including a flexible display unit having a first portion, a second portion rotatably provided based on a first boundary region formed at one side of the first portion, and a third portion rotatably provided based on a second boundary region formed at one side of the second portion; and a controller configured to control screen information output to at least one of the first portion, the second portion and the third portion, based on a preset touch input applied to at least one of the first portion, the second portion and the third portion, and to control screen information being output to at least one of the first portion, the second portion and the third portion, based on sensing of a rotation on the basis of at least one of the first boundary region and the second boundary region.

According to a further aspect, the controller may convert at least one of screen information which has been output to the first portion, the second portion and the third portion into preset screen information, based on a preset touch input applied to at least one of the first portion, the second portion and the third portion.

According to a further aspect, the controller may execute a function corresponding to an object in at least one of the first portion, the second portion and the third portion, based on a preset touch input applied to the object which has been output to at least one of the first portion, the second portion and the third portion.

According to a further aspect, the controller may terminate execution of the function, based on a preset touch input applied to a portion where the function corresponding to the object is executed.

According to a further aspect, the controller may move an object which has been output to one of the first to third portions, to one of portions other than the output portion of the object, based on a preset touch input applied to the object.

According to a further aspect, the controller may rearrange screen information which has been output from the first portion, the second portion and the third portion to one of the first portion, the second portion and the third portion, based on a preset touch input applied to at least one of the first portion, the second portion and the third portion.

According to a further aspect, the controller may output preset screen information to a portion where a preset touch input is applied, and output first screen information and second screen information, respectively, to portions other than the application portion of the preset touch input, based on the preset touch input applied to one of the first portion, the second portion and the third portion, in a state that first screen information, second screen information and third screen information have been output to the first portion, the second portion and the third portion, respectively.

According to a further aspect, the controller may output preset 1-1 screen information to the first portion, and first and second screen information to the second and third portions, respectively, based on a preset touch input applied to at least one of the first portion, the second portion and the third portion, in a state that the first screen information, the second screen information and the third screen information have been output to the first portion, the second portion and the third portion, respectively.

According to a further aspect, the controller may output preset 2-1 screen information to the second portion and the first screen information to the third portion, based on re-application of the preset touch input, in a state that the 1-1 screen information, the first screen information and the second screen information have been output to the first portion, the second portion and the third portion, respectively.

According to a further aspect, the controller may output preset 3-1 screen information to the third portion, based on re-application of the preset touch input, in a state that the 1-1 screen information, the 2-1 screen information and the first screen information have been output to the first portion, the second portion and the third portion, respectively.

According to a further aspect, the controller may re-output the first screen information, the second screen information and the third screen information to the first portion, the second portion and the third portion, respectively, based on a preset touch input applied to at least one of the first portion, the second portion and the third portion, in a state that the 1-1 screen information, the 2-1 screen information and the 3-1 screen information have been output to the first portion, the second portion and the third portion, respectively.

According to a further aspect, the controller may re-output the first screen information to a portion where a preset touch input is applied, based on the preset touch input applied to one of the first portion, the second portion and the third portion, in a state that the 1-1 screen information, the 2-1 screen information and the 3-1 screen information have been output to the first portion, the second portion and the third portion, respectively.

According to a further aspect, the controller may enlarge the screen information being output to a portion disposed toward a user in a folded state so that the screen information is output throughout the first portion, the second portion and the third portion, when an operation to unfold the folded state so that the first, second and third portions can be disposed toward the user, is sensed, in a state that the first boundary region and the second boundary region have been folded inward or outward so that only one of the first portion, the second portion and the third portion can be disposed toward the user.

According to a further aspect, the controller may control the first screen information to be output throughout one region defined based on a folded boundary region and the preset second screen information to be output to the other region distinguished from the one region, when an operation to fold one of the first boundary region and the second boundary region inward or outward is sensed, in a state that the first screen information is being output throughout the first portion, the second portion and the third portion.

According to a further aspect, the controller may control screen information which has been output to the first portion, the second portion and the third portion before a folded state, to be re-output when an operation to unfold the folded state so that the first portion, the second portion and the third portion can be disposed toward the user, is sensed, after a preset touch input is applied to at least one of the first boundary region and the second boundary region, in a state that the first and second boundary regions are folded inward or outward so that only one of the first portion, the second portion and the third portion can be disposed toward the user.

According to a further aspect, the controller may control first screen information being output to a portion disposed toward a user in a folded state, second screen information preset in relation to the first screen information and third screen information to be output to the first portion, the second portion and the third portion, respectively, when an operation to unfold the folded state so that the first portion, the second portion and the third portion can be disposed toward the user, is sensed, in a state that the first and second boundary regions are folded inward or outward so that only one of the first portion, the second portion and the third portion can be disposed toward the user.

According to another aspect of the present disclosure, there is also provided with a method for controlling a mobile terminal, including: (a) sensing a preset touch input applied to a flexible display unit including a first portion, a second portion rotatably formed based on a first boundary region formed at one side of the first portion, and a third portion rotatably formed based on a second boundary region formed at one side of the second portion; and (b) controlling screen information output to at least one of the first portion, the second portion and the third portion based on the sensed touch input, wherein the step (a) includes sensing a physical force applied from outside to rotate at least one of the first boundary portion and the second boundary portion, and wherein the step (b) includes controlling screen information output to at least one of the first portion, the second portion and the third portion based on sensing of the physical force.

According to a further aspect, the step (b) includes converting at least one of screen information which has been output to the first portion, the second portion and the third portion into preset screen information, based on a preset touch input applied to at least one of the first portion, the second portion and the third portion.

According to a further aspect, the step (b) includes re-outputting screen information which has been output to the first portion, the second portion and the third portion before a folded state, when an operation to unfold the folded state so that the first portion, the second portion and the third portion can be disposed toward a user, is sensed, after a preset touch input is applied to at least one of the first boundary region and the second boundary region, in a state that the first boundary region and the second boundary region are folded inward or outward so that only one of the first portion, the second portion and the third portion can be disposed toward the user.

According to a further aspect, the step (b) includes outputting first screen information being output to a portion disposed toward a user in the folded state, second screen information preset in relation to the first screen information and third screen information to be output to the first portion, the second portion and the third portion, respectively, when an operation to unfold the folded state so that the first portion, the second portion and the third portion can be disposed toward the user, is sensed, in a state that the first boundary region and the second boundary region are folded inward or outward so that only one of the first portion, the second portion and the third portion can be disposed toward the user.

### BRIEF DESCRIPTION OF THE DRAWING

The present invention will become more fully understood from the detailed description given herein below and accompanying drawings, which are given by illustration only, and thus are not limitative of the present invention, and wherein:
FIG. 1A is a block diagram of a mobile terminal according to an embodiment of the present invention;
FIGS. 1B and 1C are conceptual views of one example of the mobile terminal, viewed from different directions;
FIGS. 2A and 2B are conceptual views illustrating an example of a mobile terminal according to an embodiment of the present invention, which are viewed from different directions;
FIGS. 3A is a front perspective view of a mobile terminal according to an embodiment of the present invention, which illustrates that a display unit forms a single planar surface;
FIGS. 3B to 3D are front perspective views of the mobile terminal of FIG. 3A, which illustrate various examples of bending the flexible display unit;
FIGS. 4A to 4C are views illustrating embodiments where different bending areas are formed in a mobile terminal according to an embodiment of the present invention;
FIGS. 5A, 5B and 6 are views illustrating a modification example of the mobile terminal of FIG. 3A;
FIG. 7 is a view illustrating a method for fixing a bent state or releasing a fixed state in a mobile terminal according to an embodiment of the present invention;
FIG. 8A is a view illustrating an embodiment in which a bending region is preset to a predetermined region in a mobile terminal according to the present invention;
FIG. 8B is a perspective view viewed from the front and rear surfaces, respectively, illustrating various examples in which a display unit is bent according to an embodiment of the present invention;
FIG. 8C is a flowchart illustrating a control method of a mobile terminal according to the present invention;
FIGS. 9A and 9B are schematic views illustrating an embodiment in which a page of a home screen is converted according to an embodiment of the present invention;
FIGS. 10A through 10C are views illustrating embodiments to move an object to a page of a home screen according to an embodiment of the present invention;
FIGS. 11A and 11B are views illustrating embodiments of a screen conversion related to a page of a home screen and a notification panel according to an embodiment of the present invention;
FIGS. 12A and 12B are views illustrating embodiments to divide and provide information output to a notification panel according to an embodiment of the present invention;
FIGS. 13A and 13B are views illustrating embodiments to return to a previous state in a state that information is provided as in FIGS. 12A and 12B;
FIGS. 14A and 14B are views illustrating embodiments to execute a function of an object which has been output to a notification panel according to an embodiment of the present invention;
FIGS. 15A and 15B are views illustrating embodiments to execute a function of an object which has been output to a page of a home screen according to an embodiment of the present invention;
FIGS. 15C and 15D are views illustrating embodiments to change a position of screen information which has been output to each portion according to an embodiment of the present invention;
FIGS. 15E and 15F are views illustrating embodiments to terminate a function of an object according to an embodiment of the present invention;
FIG. 16 is a view illustrating an embodiment to control screen information being output by an operation to unfold a folded display unit according to an embodiment of the present invention;
FIG. 17 is a view illustrating an embodiment to control screen information being output by an operation to fold part of a display unit according to an embodiment of the present invention;
FIGS. 18A through 18C are views illustrating embodiments in which related screen information is output gradationally by an operation to unfold a folded display unit according to an embodiment of the present invention; and
FIGS. 19A through 19C are views illustrating another embodiment in which screen information being output is controlled by an operation to unfold a folded display unit according to an embodiment of the present invention.

### DETAILED DESCRIPTION OF THE PREFERRED EMBODIMENTS

Description will now be given in detail of the exemplary embodiments, with reference to the accompanying drawings. For the sake of brief description with reference to the drawings, the same or equivalent components will be provided with the same reference numbers, and description thereof will not be repeated. A suffix "module" or "unit" used for constituent elements disclosed in the following description is merely intended for easy description of the specification, and the suffix itself does not give any special meaning or function. In describing the present invention, if a detailed explanation for a related known function or construction is considered to unnecessarily divert the gist of the present disclosure, such explanation has been omitted but would be understood by those skilled in the art. The accompanying drawings are used to help easily understood the technical idea of the present invention and it should be understood that the idea of the present disclosure is not limited by the accompanying drawings.

A terminal in the present description may include a mobile terminal such as a portable phone, a smart phone, a notebook computer, a digital broadcasting terminal, Personal Digital Assistants (PDA), Portable Multimedia Player (PMP), a navigation system, a slate PC, a tablet PC, an ultra book, a wearable device (e.g., smart watch), a glass-type terminal (e.g., smart glass), a head mounted display (HMD), etc.

However, it will be obvious to those skilled in the art that the present invention may be also applicable to a fixed terminal such as a digital TV, a desktop computer and a digital signage, except for specific configurations for mobility.

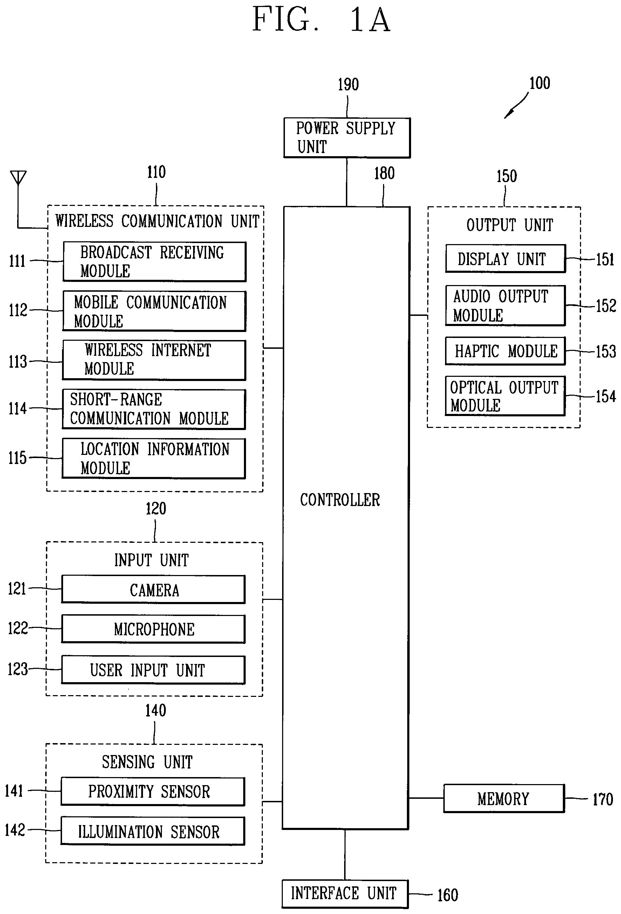

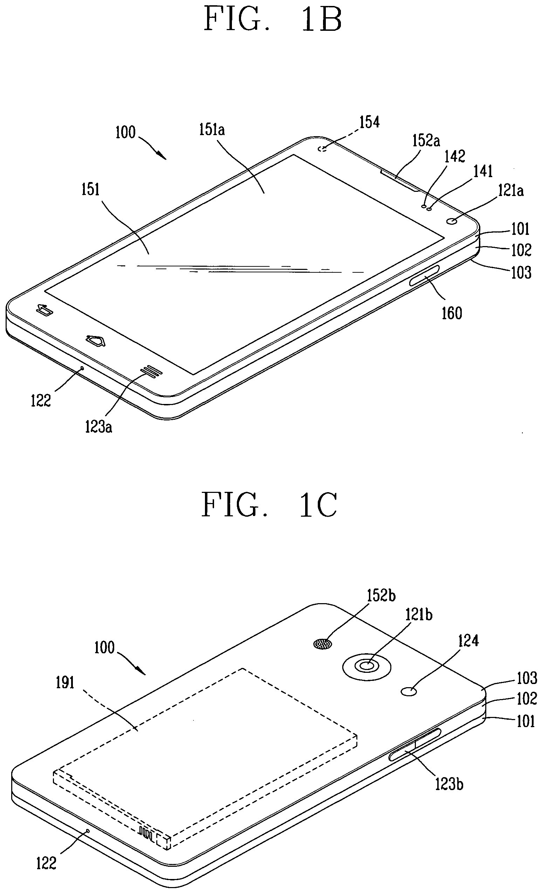

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components of FIG. 1A is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in FIG. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the components may operate in cooperation with one another in order to implement an operation, control or control method of the mobile terminal according to various exemplary embodiments to be described below. The operation, control or control method of the mobile terminal may be implemented on the mobile terminal by the execution of at least one application program stored in the memory 170.

Hereinafter, the aforementioned components will be explained in more detail with reference to FIG. 1A, before various embodiments are explained.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to the mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or performs pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provides internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The display unit 151, the first audio output module 152a, the second audio output module 152b, the proximity sensor 141, the illumination sensor 142, the optical output module 154, a first camera 121a, a second camera 121b, the first manipulation unit 123a, the second manipulation unit 123b, the microphone 122, the interface 160, etc. may be provided at the mobile terminal 100.

As shown in FIGS. 1B and 1C, the display unit 151, the first audio output module 152a, the proximity sensor 141, the illumination sensor 142, the optical output module 154, the first camera 121a and the first manipulation unit 123a are arranged on a front surface of the terminal body. The second manipulation unit 123b, the microphone 122 and the interface 160 are arranged on side surfaces of the terminal body. And the second audio output module 152b and the second camera 121b are arranged on a rear surface of the terminal body.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable mobile terminals. Examples of such suitable mobile terminals include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two mobile terminals, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a receiver, and the second audio output module 152b may be implemented in the form of a loud speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may be implemented in a user's non-tactile manner, e.g., by a proximity touch, a hovering touch, etc.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 (refer to FIG. 1A) may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

In the present invention, information processed by the mobile terminal may be displayed by using a flexible display. This will be explained in more detail with reference to the attached drawings.

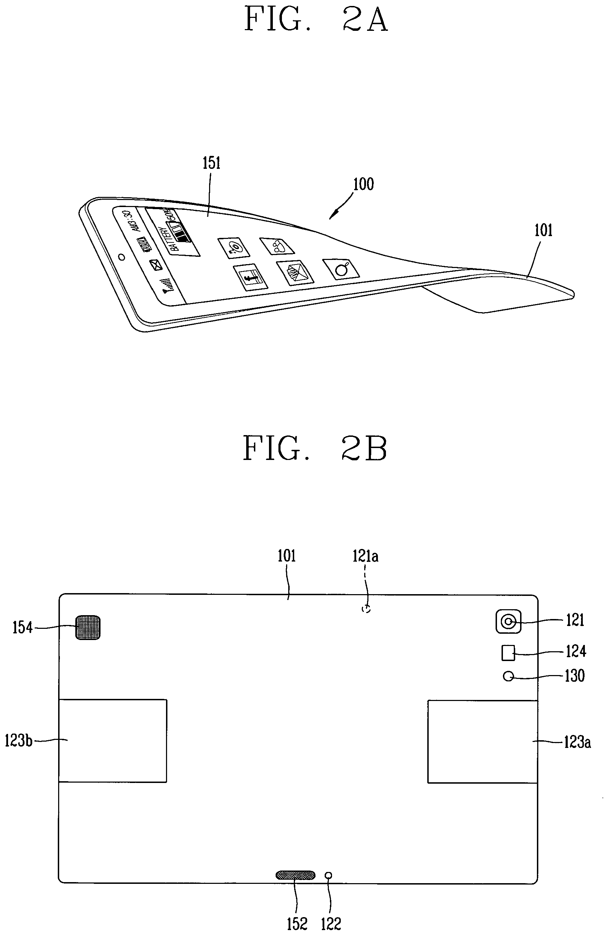

FIGS. 2A and 2B are conceptual views illustrating an example of a mobile terminal according to an embodiment of the present invention, which are viewed from different directions.

As shown in FIGS. 2A and 2B, the flexible display unit 151 is arranged on a front surface of the body of the mobile terminal 100, and the camera 121, the audio output unit 152, the microphone 122, the rear input units 123a and 123b, and the optical output unit 154 are arranged on a rear surface of the body of the mobile terminal 100. However, alternative arrangements are possible and within the teachings of the instant invention. Some components may be omitted or rearranged.

As shown in FIG. 2A, the flexible display unit 151 may be arranged on a front surface of the mobile terminal 100. The flexible display unit 151 is configured to output information processed in the mobile terminal 100. For instance, the flexible display unit 151 may display execution screen information of an application program executing at the mobile terminal 100 or user interface (UI) and graphic user interface (GUI) information in response to the execution screen information.

The flexible display unit 151 is configured to be deformable by an external force. This deformation may include any of curving, bending, folding, twisting, rolling, and combinations thereof. The deformable display unit 151 may also be referred to as a 'flexible display unit' or 'bendable display unit'. In some implementations, the flexible display unit 151 may include a general flexible display, electronic paper (also known as e-paper), and combinations thereof. That is, the flexible display unit 151 means a display unit of which at least part is foldable in a flexible manner.

The flexible display is generally formed as a lightweight, non-fragile display, which still exhibits characteristics of a conventional flat panel display, but is instead fabricated on a flexible substrate which can be deformed as noted previously. The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When the flexible display unit 151 is not deformed (for example, in a state with an infinite radius of curvature and referred to as a first state), a display region of the flexible display unit 151 includes a generally flat surface. When the flexible display unit 151 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized so a light emission of each unit pixel (sub-pixel) arranged in a matrix configuration is controlled independently. The unit pixel denotes an elementary unit for representing one color.

According to one alternative embodiment, the first state of the flexible display unit 151 may be a curved state (for example, a state of being curved from up to down or from right to left), instead of being in flat state. In this embodiment, when an external force is applied to the flexible display unit 151, the flexible display unit 151 may transition to the second state such that the flexible display unit is deformed into the flat state (or a less curved state) or into a more curved state.

The flexible display unit 151 may be formed of material of a plurality of layers. If desired, the flexible display unit 151 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states. The touch sensor may be arranged on a substrate of the display, or may be provided in the display.

The flexible display unit 151 may form a touch screen together with a touch sensor. In this instance, the touch screen may serve as the user input unit 123. A cause to generate a state conversion of the flexible display unit 151 is not limited to an external force. For instance, when the flexible display unit 151 is in a first state, the flexible display unit 151 may be deformed to a second state by a user's command or application command. More specifically, the mobile terminal 100 may include a driving unit. If the current condition corresponds to a preset condition, the first state may be changed into the second state by the driving unit, not by an external force.

One option is to configure the mobile terminal 100 according to an embodiment of the present invention to include a deformation sensor which senses the deforming of the flexible display unit 151. The deformation sensor may be included in the sensing unit 140.

The deformation sensor may be located in the flexible display unit 151 or the case 101 to sense information related to the deforming of the flexible display unit 151. Examples of such information related to the deforming of the flexible display unit 151 may be a deformed direction, a deformed degree, a deformed position, a deformed amount of time, an acceleration that the deformed flexible display unit 151 is restored, and the like. Alternatively, such information may include various information sensible by bending of the flexible display unit 151.

In some embodiments, the controller 180 or other component can change information displayed on the flexible display unit 151, or generate a control signal for controlling a function of the mobile terminal 100, based on the information related to the deforming of the flexible display unit 151. Such information is typically sensed by the deformation sensor.

For instance, if the flexible display unit 151 is bent in correspondence to an external force, the controller 180 can rearrange, separate, synthesize or change a curvature of a screen image which has been displayed on the flexible display unit 151, according to a bent direction of the flexible display unit, a bent degree, and a restoration acceleration. More specifically, if the flexible display unit 151 is inward bent by an external force, the controller 180 can control screen images displayed on the flexible display unit, to be adjacent to each other. Further, if the flexible display unit 151 is outward bent by an external force, the controller 180 can control screen images displayed on the flexible display unit, to be distant from each other. The mobile terminal 100 is shown having a case 101 for accommodating the flexible display unit 151.

The mobile terminal 100 may include a case 201 for accommodating the flexible display unit 151. The case 101 may be configured to be transformable together with the flexible display unit 151 by an external force, taking into account characteristics of the flexible display unit 151. That is, the flexible display unit 151 is formed to be bendable or foldable together with the case 101. For instance, the case 101 may be formed of a transformable material such as plastic, thin glass, fiber, thin metal (e.g., aluminum, etc.), textile and silicon, or a combination thereof.

The case 101 may be partially formed of a dielectric material or a low conductive material, and at least part of a structure of the case 101 may be formed of metal.

As shown in FIG. 2B, as another example of the user input unit 123, one rear input unit or a plurality of rear input units 123a and 123b may be located on the rear surface of the case 101 of the mobile terminal. The rear input units 123a and 123b can be manipulated by a user to provide input to the mobile terminal 100. The input may be used in a variety of different ways. For example, the rear input unit may be used by the user to provide an input for power on/off, start, end, scroll, control volume level being output from the audio output unit 152, switch to a touch recognition mode of the flexible display unit 151, and the like. The rear input unit may be configured to permit a touch input, a push input, or combinations thereof.

The rear input units 123a and 123b may be located to overlap the flexible display unit 151 of the front side in a thickness direction of the body of the mobile terminal. As one example, the rear input units 123a and 123b may be located on a rear surface of the mobile terminal 100 in a flat state of the case 101. However, when the case 101 is bent so that a left end and a right end thereof can face each other, the rear input units 123a and 123b may be located on a front surface of the mobile terminal 100. However, the present invention is not limited to this. That is, a position and the number of the rear input units may be variable.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the flexible display unit 151 or implemented in the user input units 123a and 123b. The microphone 122 is shown located at an end of the mobile terminal 100, but other locations are possible. If desired, multiple microphones may be implemented, with such an arrangement permitting the receiving of stereo sounds.

The second camera 121b is shown located at the rear side of the body of the mobile terminal. When the first camera 121a is arranged on a front surface of the body, the second camera 121b has an image capturing direction that is substantially opposite to the image capturing direction of the first camera unit 121a.

The first camera 121a may be arranged at an opening formed at part of the flexible display unit 151. Alternatively, the first camera 121a may be arranged at an opening formed at part of the case disposed on a front surface. The second camera 121b is configured to process an image frame of still images or moving images acquired by an image sensor in a capturing mode or a video call mode. The processed image frame may be displayed on the flexible display unit 151, and may be stored in the memory 170.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

A flash 124 is shown adjacent to the second camera 121b. When an image of a subject is captured with the second camera 121b, the flash 124 may illuminate the subject.

An electromagnetic wave generation unit 130 may be disposed close to the second camera 121b. When the second camera 121b is activated, the electromagnetic wave generation unit 130 emits generated electromagnetic waves.

At least one antenna for wireless communication may be located on the body of the mobile terminal. The antenna may be installed in the body of the mobile terminal or formed by the case. For example, an antenna which configures a part of the broadcast receiving module 111 may be retractable into the body of the mobile terminal. Alternatively, an antenna may be formed using a film attached to an inner surface of the rear cover, or a case that includes a conductive material.

A battery located in the mobile terminal 100 may also be deformable in cooperation with the flexible display unit 151, taking into account the characteristic of the flexible display unit 151. One technique to implement such a battery is to use a stack and folding method of stacking battery cells.

Further, the interface unit 160 may be disposed on a side surface of the body of the mobile terminal. The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

A battery may receive power via a power source cable connected to the interface unit 160. Also, the battery can be recharged in a wireless manner using a wireless charger. Wireless charging may be implemented by magnetic induction or electromagnetic resonance.

In the mobile terminal 100 according to an embodiment of the present invention, which can include at least one of the above components, the controller 180 can determine a state of the flexible display unit 151 in correspondence to bending of the flexible display unit 151. Further, the controller 180 can sense a state conversion of the flexible display unit 151. Based on the state conversion of the flexible display unit 151, the controller 180 can control information output to the flexible display unit 151. Thus, information output to the flexible display unit is determined by a state of the flexible display unit 151.

Hereinafter, a structure of the flexible display unit 151, and a method for controlling information displayed on the flexible display unit 151 according to a bent state of the flexible display unit 151 will be explained in more detail with reference to the attached drawings. Firstly, the structure of the flexible display unit 151 of a mobile terminal according to an embodiment of the present invention will be explained.

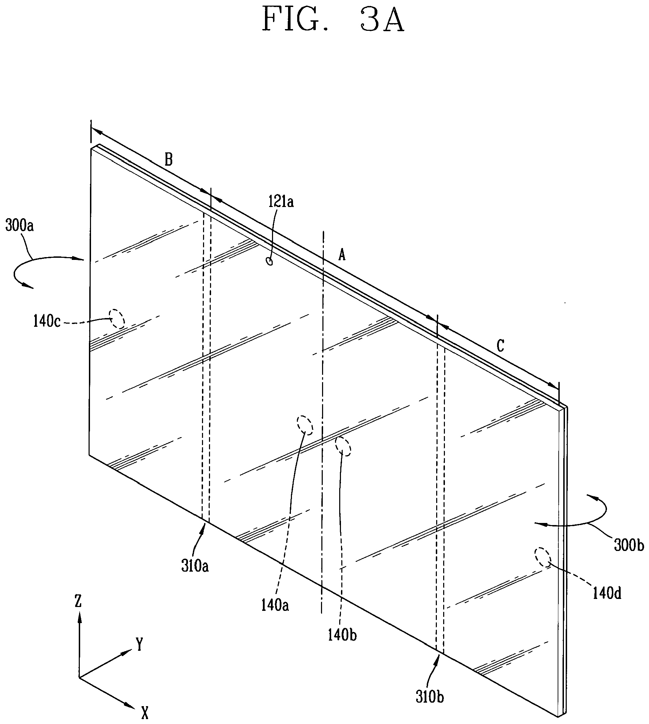

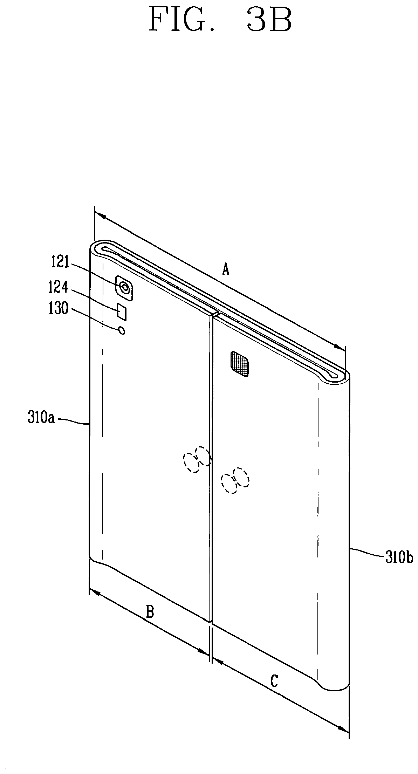

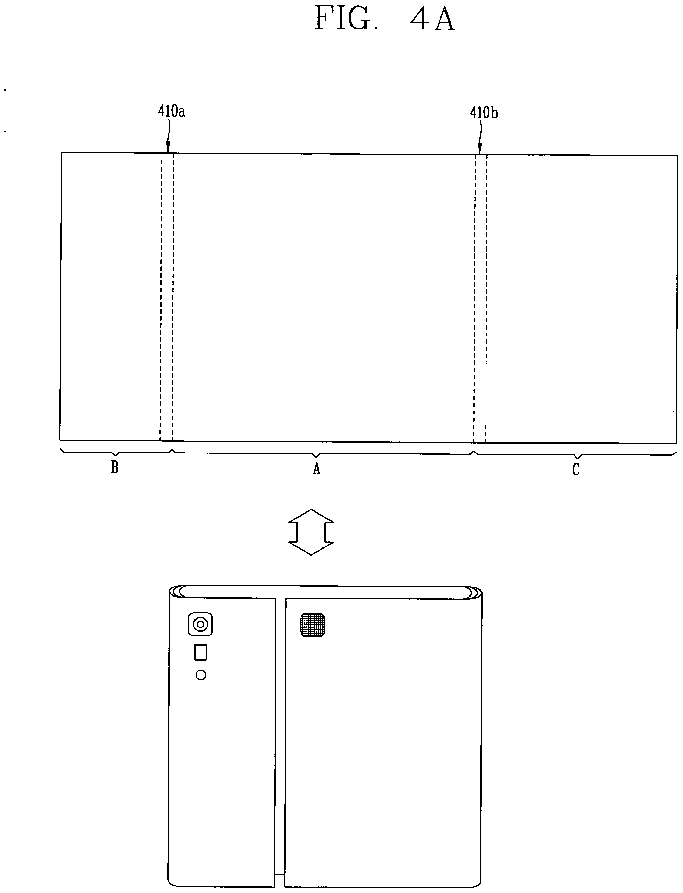

FIG. 3A is a front perspective view of a mobile terminal according to an embodiment of the present invention, which illustrates that a display unit forms a single planar surface. FIGS. 3B to 3D are front perspective views of the mobile terminal of FIG. 3A, which illustrate various examples to bend the flexible display unit. FIGS. 4A to 4C are views illustrating embodiments where different bending areas are formed in a mobile terminal according to an embodiment of the present invention.

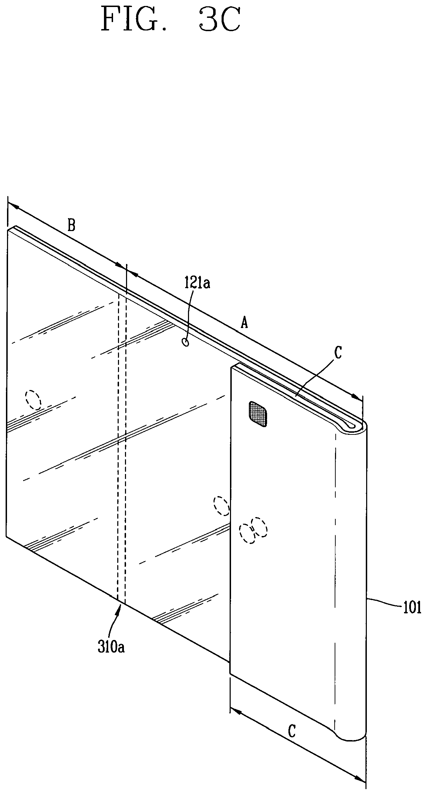

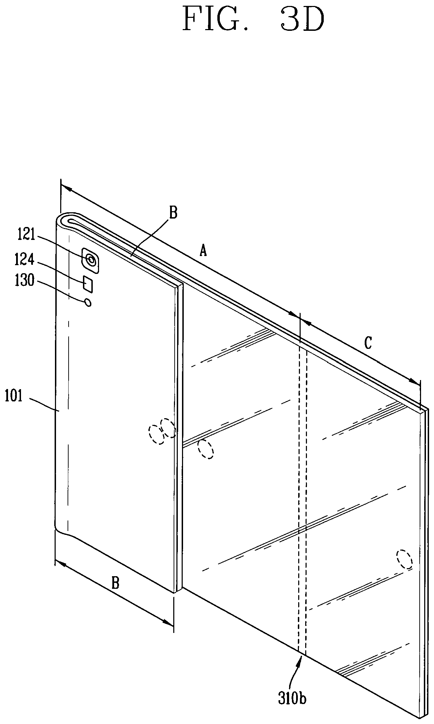

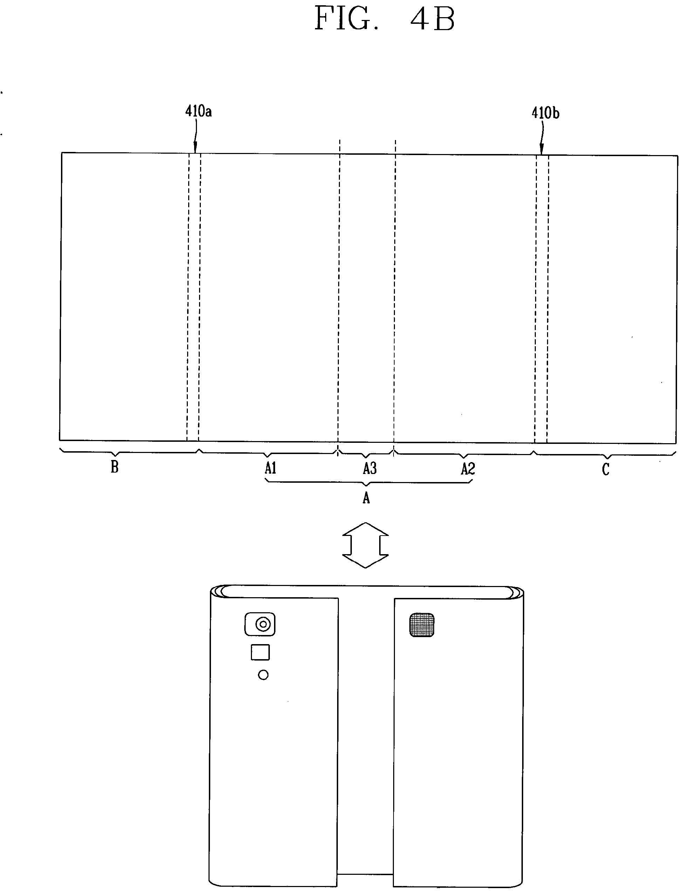

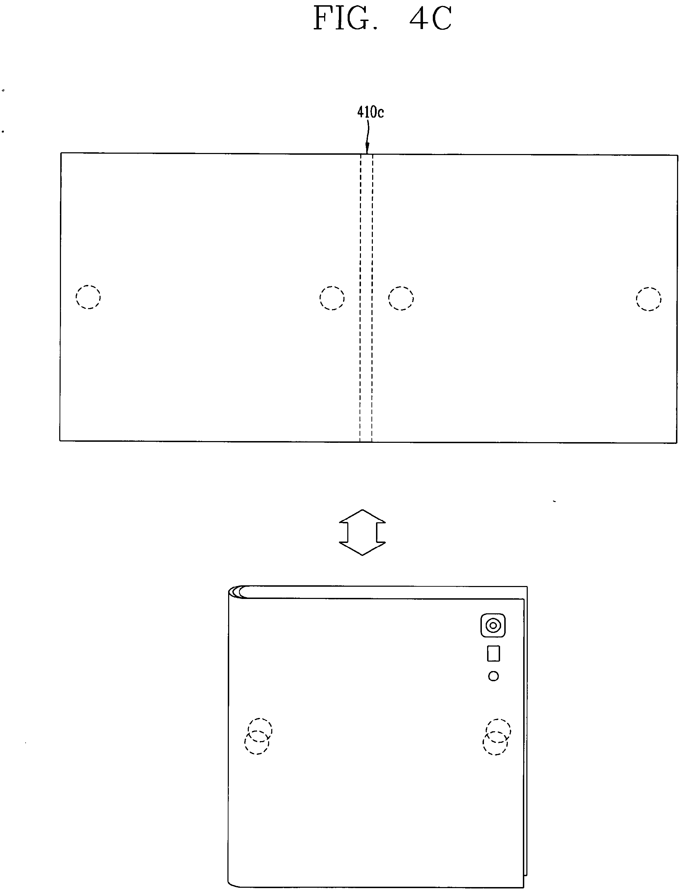

Referring to FIGS. 3 and 4, the mobile terminal 100 according to an embodiment of the present invention includes a case 101 which forms the appearance of the mobile terminal 100, a display unit 151 disposed on a front surface of the mobile terminal 100, and a sensing unit 140 (or transformation sensing mechanism) configured to sense a transformation of the flexible display unit 151.

The flexible display unit 151 can be bent or folded. Folding means a state that a curvature radius of part of a body of the mobile terminal is smaller than a reference value, i.e., a folded state. For such folded state of the mobile terminal, screens of the flexible display unit 151 contact each other or are positioned close to each other.

On the contrary, the bending means a state that a curvature radius of part of the body of the mobile terminal is larger than the reference value, i.e., a bent state. The folding and bending may be differentiated from each other according to a bent degree. For instance, if the mobile terminal is bent at an angle larger than a predetermined value, the state may be defined as 'folding'. On the contrary, if the mobile terminal is bent at an angle equal to or smaller than the predetermined value, the state may be defined as 'bending'. Even if the mobile terminal is bent at an angle larger than a predetermined value, if a curvature radius is larger than the reference value, the state may be also defined as 'bending'. Hereinafter, such bending and folding will be referred to as 'bending' for convenience.

The body of the mobile terminal, i.e., at least one of the flexible display unit 151 and a case 101 may be provided with one or more bending areas 310. And the body of the mobile terminal may be configured to be rotatable and bendable based on the bending area 310. As an example, a left end of the body may be bendable or transformable by rotating in a first arrow direction 300a, based on a first bending area 310a. As another example, a right end of the body may be bendable or transformable by rotating in a second arrow direction 310b, based on a second bending area 310b. That is, the present invention provides a dual foldable display which can be bent based on the first and second bending areas.

The bending area 310 may be defined as a virtual vertical line and/or virtual horizontal line connecting points where a resistance value larger than a reference value has been detected to each other, among points where bending has occurred. Such bending area may be preset to a predetermined area among an entire region of the body of the mobile terminal. That is, a user can bend the body of the mobile terminal, based on a preset bending area.

The bending area may be variously formed by an external force to bend the body of the mobile terminal, rather than being preset. More specifically, the bending area may be formed on an arbitrary position of the mobile terminal in a horizontal direction and/or vertical direction by an external force. And the body of the mobile terminal may be bent based on the formed bending area. That is, the bending area may be differently implemented according to an external force applied to the mobile terminal.

For convenience, the mobile terminal of the present invention will be explained in more detail, using an example that the first bending area 310a and the second bending area 310b are symmetrically formed at the body of the mobile terminal.

The flexible display unit 151 includes a first part (A) defined by the first bending area 310a and the second bending area 310b, a second part (B) and a third part (C). More specifically, the flexible display unit 151 may include the first part (A); the second part (B) formed to be rotatable based on the first bending area 310a formed at one side of the first part (A), so as to be in one of a state to cover the first part (A) and a state not to cover the first part (A); and the third part (C) formed to be rotatable based on the second bending area 310b formed at another side of the first part (A), so as to be in one of a state to cover the first part (A) and a state not to cover the first part (A). The first part (A) includes a region (A1) covered by the second part (B), and a region (A2) covered by the third part (C).

At least one of a position and a size of the first part (A), the second part (B) and the third part (C) is variable according to a position of the first and second bending areas 310a and 310b. That is, the first part (A), the second part (B) and the third part (C) may be distinguished from each other by the bending areas.

For instance, as shown in FIG. 3A, the first bending area 310a and the second bending area 310b may be formed at positions symmetrical to each other. Alternatively, as shown in FIG. 4A, a first bending area 410a and a second bending area 410b may be formed at positions asymmetrical to each other. The first part (A), the second part (B) and the third part (C) are variable according to a position of the first and second bending areas.

As shown in FIG. 4B, when the second part (B) and the third part (C) cover the first part (A), a region (A3) not covered by the second part (B) and the third part (C) may be generated. In this instance, the first part (A) includes a region (A1) covered by the second part (B), a region (A2) covered by the third region C, and a region A3 not covered by the second part (B) and the third part (C). Hereinafter, the part A3 not covered by the second part (B) and the third part (C) will be referred to as a 'notification display portion'.

As shown in FIG. 4C, a bending area 410c may be formed, and the flexible display unit 151 may be divided into a left half part and a right half part based on the single bending area 410c. That is, the mobile terminal of the present invention may be bent in various manners as one or more bending areas are formed at various positions.

For convenience, the mobile terminal of the present invention will be explained with taking FIG. 3A as an example. However, the present invention is not limited to this. That is, structural and/or functional features of the present invention may be equally applied to the mobile terminal of FIGS. 4A and 4B. For convenience, the present invention will be explained under an assumption that the first bending area 310a is included in the second part (B), and the second bending area 310b is included in the third part (C). However, the present invention is not limited to this. That is, the first and second bending areas 310a, 310b may be included in the first part (A), or may correspond to an additional display region distinguished from the first to third parts (A, B, C).

A state of the body of the mobile terminal may be variously defined according to a state of at least one of the second part (B) and the third part (C).

For instance, as shown in FIG. 3B, when the first part (A) is covered by the second part (B) and the third part (C) (or when the left side end and a right side end of the mobile terminal face each other), may be defined as a 'closed state'. Such closed state may be advantageous when a user stores the mobile terminal in a pocket, a bag, or the like. The reason is because the flexible display unit 151 can be prevented from being scratched or damaged by other object, and because the mobile terminal can be easily carried due to its small size, in such closed state.

A state to cover the first part (A) means when screens of the flexible display unit 151 contact each other, the screens are close to each other within a reference distance, etc. Further, a state not to cover the first part (A) corresponds to a state rather than the state to cover the first part (A). That is, the state to cover the first part (A) corresponds to when folding has occurred, whereas the state not to cover the first part (A) corresponds to when bending has occurred, or when neither folding nor bending has occurred.

As another example, as shown in FIG. 3C, when the first part (A) is covered by the third part (C) without being covered by the second part (B), may be defined as a 'first open state'. As still another example, as shown in FIG. 3D, when the first part (A) is covered by the second part (B) without being covered by the third part (C), may be defined as a 'second open state'.

As shown in FIG. 3A, when an entire region of the flexible display unit is exposed to the outside, i.e., when the first part (A) is not covered by any one of the second part (B) and the third part (C), may be defined as a 'third open state'. In this instance, as the entire region of the flexible display unit is exposed to the outside, the mobile terminal may implement a large screen.

The mobile terminal 100 may have a structure to fold and unfold like a pocket book. As a user folds or bends the flexible display unit 151 based on one or more bending areas by applying a force to the flexible display unit 151, a partial region or an entire region of the flexible display unit to display screen information may be selected. As shown in FIG. 3B, as one part of the flexible display unit 151 is bent to cover another part of the flexible display unit 151, the flexile display unit 151 may be protected from scratch or damage.

The controller 180 can distinguish states of the mobile terminal from each other, based on a position of a bending area, a bending degree, a bending direction, a bending speed, etc. For instance, when bending has occurred based on the first bending area 310a, the controller 180 can determine a state of the mobile terminal, according to whether the bending has occurred in a 'y+' direction or a 'y-' direction. Then, based on the determined state of the mobile terminal, the controller 180 can execute a different function or display different screen information on the flexible display unit 151.

More specifically, the controller 180 can determine a state of the mobile terminal among the aforementioned states, using at least one sensing unit 140. The sensing unit 140 may include at least one of a proximity sensor, an IR sensor, a magnetic sensor and an illumination sensor. And the sensing unit 140 may sense a relative position of the second part (B) and/or the third part (C), with respect to the first part (A).

For instance, a first sensing portion 140a may be disposed on the region (A1) covered by the second part (B), and a second sensing portion 140b may be disposed on the region (A2) covered by the third part (C). A third sensing portion 140c may be disposed on the second part (B), at a position corresponding to the first sensing portion 140a. A fourth sensing portion 140d may be disposed on the third part (C), at a position corresponding to the second sensing portion 140d. The controller 180 determines whether the second part (B) covers the first part (A) or does not cover the first part (A), using the first sensing portion 140a and the third sensing portion 140c. And the controller 180 determines whether the third part (C) covers the first part (A) or does not cover the first part (A), using the second sensing portion 140b and the fourth sensing portion 140d. The controller 180 determines a state of the body of the mobile terminal, based on information collected from the plurality of sensing portions 140a to 140d.

As another example, the sensing unit 140 may include a bending sensor disposed on one or both of a front surface and a rear surface of the flexible display unit 151, and configured to sense bending of the flexible display unit 151. The bending sensor may be a sensor formed to be bendable and configured to sense bending using a principle that a resistance value is variable according to a bending degree. For instance, the bending sensor may be implemented as an optical fiber bending sensor using a strain (transformation rate) of optical fiber, an electric resistance bending sensor using an electric resistance, a pressure sensor, a strain gauge, etc. The sensing unit 140 may calculate a resistance value of the bending sensor, based on a size of a voltage applied to the bending sensor, or a size of a current flowing on the bending sensor. Then the sensing unit 140 may sense a bending-occurred position, a bending degree, etc. based on the calculated resistance value.

When the sensing unit 140 senses bending of the flexible display unit 151 by the bending sensor, the controller 180 can search for bending areas based on a resistance value calculated by the bending sensor. Then the controller 180 can distinguish the first part (A), the second part (B) and the third part (C) from each other, based on the bending areas, and may determine a state of the body of the mobile terminal.

The controller 180 determines a state of the mobile terminal 100 using the sensing unit 140, and controls information to be output to the flexible display unit 151 based on a result of the determination. More specifically, upon sensing of a state conversion of at least one of the second part (B) and the third part (C), the controller 180 can differently control a position on the flexible display unit 151 where information is to be output, and a type of information to be output to the position, based on the one or more state-converted parts.

For instance, when a closed state is converted into a first open state, the controller 180 can activate part of the flexible display unit 151 exposed to the outside (e.g., the second part (B), and a region of the first part (A) covered by the second part (B)), and may display a first execution screen on the activated part. On the contrary, when a closed state is converted into a second open state, the controller 180 can activate part of the flexible display unit 151 exposed to the outside (e.g., the third part (C), and a region of the first part (A) covered by the third part (C)), and may display a second execution screen on the activated part.

The execution screen means various types of screen information which can be output to the flexible display unit 151, and the first execution screen and the second execution screen are different from each other. For instance, the screen information may be an execution screen for an application, a home screen, a menu screen, a screen corresponding to a function executed by a user's request, a notification screen informing occurrence of an event, a lock screen for inputting a password for releasing a locked state, etc. The screen information may be composed of one of texts, images (including icons), flashes and moving images.

As another example, when an open state is converted into a closed state, the controller 180 can convert the flexible display unit 151 into a deactivated state from an activated state, and may execute a locked state where input of a password is required. The deactivated state of the flexible display unit 151 means an 'OFF' state of an illumination lamp for illuminating the flexible display unit 151. In the deactivated state of the flexible display unit 151, neither information nor graphic image is output to the flexible display unit 151.

On the contrary, the activated state of the flexible display unit 151 means an 'ON' state of the illumination lamp for illuminating the flexible display unit 151. In the activated state of the flexible display unit 151, different screen information is output to the flexible display unit 151, under control of the controller 180. In addition, once the flexible display unit 151 is activated in a locked state, the controller 180 can display a lock screen configured to receive, from a user, a password for releasing the locked state.

The locked state means when reception of a control command input by a user is restricted, which can be released only when a password set by a specific person is input. If the flexible display unit 151 is activated under such locked state, a lock screen configured to input a password is displayed. The locked state may be released by face recognition, iris recognition, fingerprint recognition, a plurality of touch inputs corresponding to a preset pattern, a touch which forms a preset orbit, etc. Other screen information rather than the lock screen may be displayed on the flexible display unit 151 only when the locked state is released.

The body of the mobile terminal may have one or more basic states, and may be configured to return to one of the states if there is no external force to bend the body in a first arrow direction 300a and/or a second arrow direction 300b. That is, if there is no.external force to bend the body, the body may maintain its basic state, or may return to the basic state. For instance, as shown in FIG. 3A, the basic state may be when the flexible display unit 151 forms a single planar surface. More specifically, the basic state may mean a flat state where the first to third parts (A, B, C) and the first and second bending areas 310a, 310b form a single planar surface.

The mobile terminal 100 may be provided with a fixing member for making the body maintain a state rather than the basic state. For instance, when the basic state is converted into a closed state by an external force and then the external force disappears, the body of the mobile terminal may maintain the closed state by the fixing member, without returning to the basic state.

The fixing member may fix a bent state of the body under control of the controller 180. More specifically, the fixing member is formed so that the body of the mobile terminal can maintain one of a closed state, a first open state, a second open state and a third open state. That is, the fixing member is formed so that at least one of the second part (B) and the third part (C) can maintain an overlapped state with the first part (A).

Also, the fixing member may release a fixed bent state of the body so that the body can return to its basic state from a bent state. More specifically, when the body of the mobile terminal maintains one of a closed state, a first open state and a second open state, the fixing member may release a fixed bent state of the body under control of the controller 180, so that the one state cannot be maintained any longer. For instance, if a fixed state to a closed state is released, the second part (B) and the third part (C) which were covering the first part (A) do not cover the first part (A) any longer. Thus, the closed state may be converted into a third open state.

For instance, the fixing member may include an electromagnet for attracting an object distant therefrom. For instance, the fixing member may be disposed on the first part (A) so as to attract the second part (B) and the third part (C), so that an overlapped state of the first part (A) with the second part (B) and the third part (C) can be maintained in a closed state. If the closed state is released as it corresponds to a preset condition, or if the closed state is released by a user's input, the controller 180 controls the fixing member not to attract the second part (B) and the third part (C), by disconnecting a current supplied to the electromagnet. In this instance, the body of the mobile terminal may return to a basic state from the closed state.

As another example, the fixing member may be formed to have a layered structure with the flexible display unit 151, or may be integrally formed with the flexible display unit 151. The fixing member may be formed to be convertible to a non-flexible state (rigid state) from a flexible state, or to a flexible state from a non-flexible state, under control of the controller 180. If the fixing member is in a rigid state, the body of the mobile terminal may maintain a bent state. On the contrary, if the fixing member is in a flexible state, the body of the mobile terminal may be transformable.

In the present invention, information processed by the mobile terminal may be displayed on a flexible display. Hereinafter, the display will be explained in more detail with reference to the attached drawings.

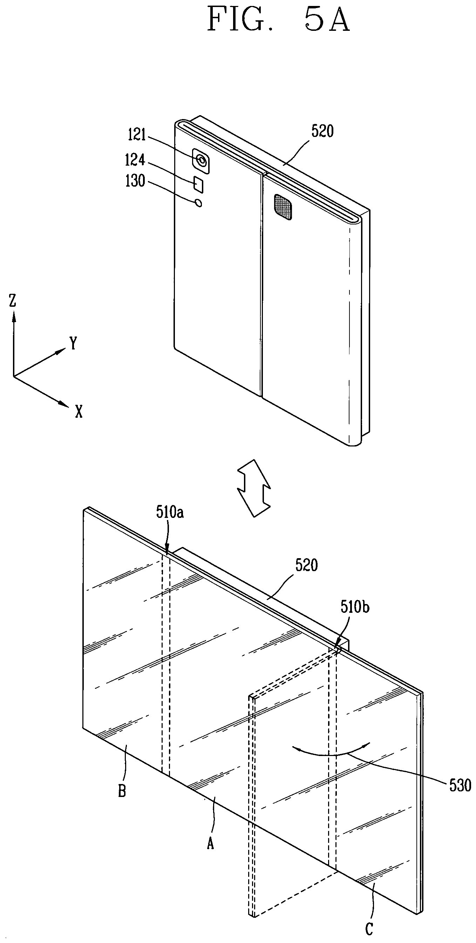

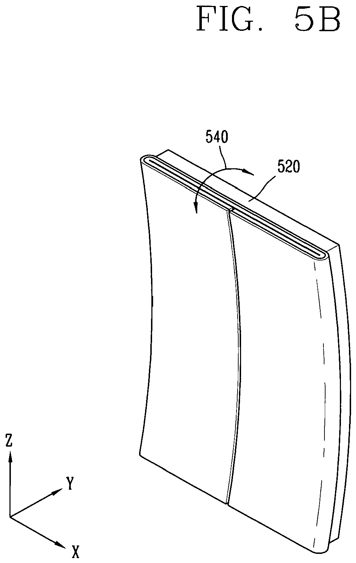

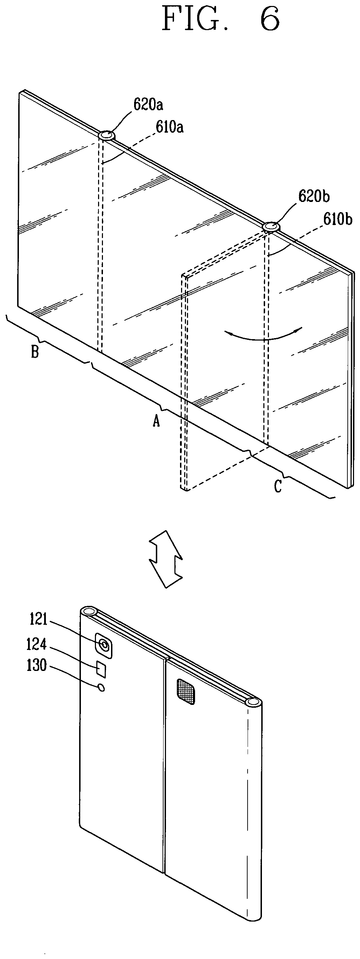

FIGS. 5A, 5B and 6 are views illustrating a modification example of the mobile terminal of FIG. 3A. Referring to FIG. 5A, a mobile terminal 100 according to a modification embodiment of the present invention may further include a supporting structure 520. The supporting structure 520 may be formed of a relatively thick material such as carbon fiber, plastic, glass, ceramic, fiber, metal (e.g., stainless steel, aluminum, etc.), textile, silicon, other suitable material, or a combination thereof. Various types of electronic components are disposed at an inner space of the supporting structure 520.

The flexible display unit 151 may be bent in an arrow direction 530, based on an axis parallel to a 'Z'-axis of FIG. 5A, by being coupled to the supporting structure 520. A first bending area 510a may be formed at a position corresponding to a left side end of the supporting structure 520, and a second part (B) formed at a left side based on the first bending area 510a may rotate to cover or not to cover a first part (A). Likewise, a second bending area 510b may be formed at a position corresponding to a right side end of the supporting structure 520, and a third part (C) formed at a right side based on the second bending area 510b may rotate to cover or not to cover the first part (A).

The supporting structure 520 may extend in a vertical direction along the 'Z'-axis of FIG. 5A. By the supporting structure 520, the body of the mobile terminal may have a resistance to a bent state. More specifically, among an entire region of the flexible display unit 151, a region coupled to the supporting structure 520 is less bent than a region not coupled to the supporting structure 520. Under such configuration, the first part (A) coupled to the supporting structure 520 may maintain a flat state, and electronic components having less flexibility than the flexible display unit 151 may be disposed in the supporting structure 520 to thus be protected from bending of the flexible display unit 151.

As shown in FIG. 5B, the supporting structure 520 may be formed to be bendable. More specifically, the supporting structure 520 may be bendable in an arrow direction 540, based on an axis parallel to an 'X'-axis of FIG. 5B. However, in this instance, the supporting structure 520 may be formed so that a bending degree thereof can be smaller than that of the flexible display unit 151.

Referring to FIG. 6, a first bending area 610a and a second bending area 610b may be preset to the flexible display unit 151. More specifically, the first bending area 610a may be preset by a first hinge portion 620a, and the second bending area 610b may be preset by a second hinge portion 620b.

The second part (B) including the first bending area 610a may be formed to be rotatable by the first hinge portion 620a, and may be bendable so as to be either in a state to cover the first part (A) or in a state not to cover the first part (A). Likewise, the third part (C) including the second bending area 610b may be formed to be rotatable by the second hinge portion 620b, and may be bendable so as to be either in a state to cover the first part (A) or in a state not to cover the first part (A).

The first bending area 610a and the second bending area 610b may be configured to display information, and may protrude by the first hinge portion 620a and the second hinge portion 620b as shown in FIG. 6. The flexible display unit 151 including the first bending area 610a and the second bending area 610b may be formed so that its entire region can be flat.

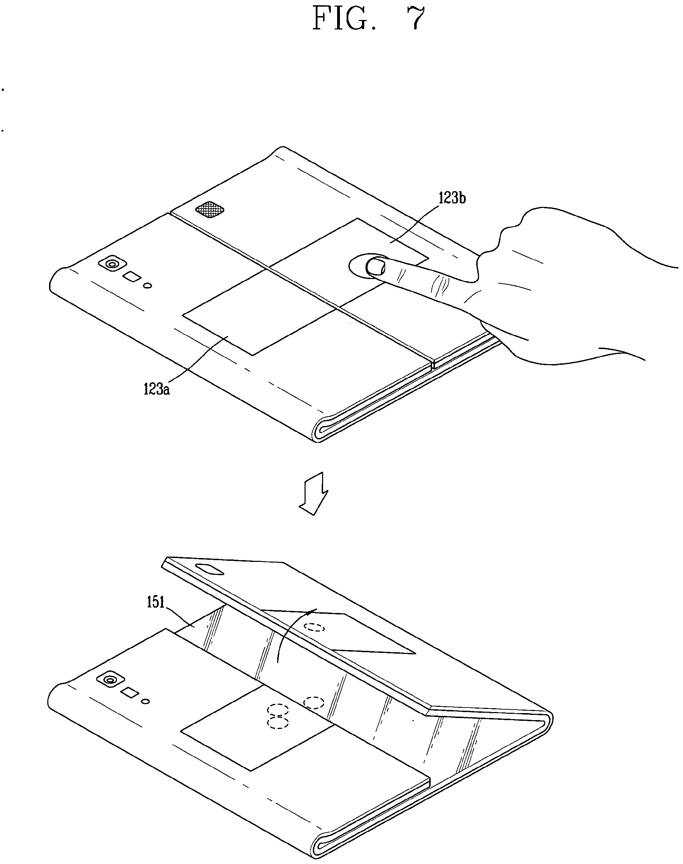

FIG. 7 is a view illustrating a method for fixing a bent state or releasing a fixed state in a mobile terminal according to an embodiment of the present invention. Referring to FIG. 7, the body of the mobile terminal is formed to maintain a bent state. More specifically, a fixing member of the mobile terminal may fix a bent state (or folded state) so that one part of the flexible display unit 151 can contact another part of the flexible display unit 151, or may release the fixed state. For instance, the fixing member may be formed to maintain one of a closed state, a first open state and a second open state. In this instance, the closed state means when both of the second part (B) and the third part (C) cover the first part (A). The first open state means when the third part (C) covers the first part (A), but the second part (B) does not cover the first part (A). And the second open state means when the second part (B) covers the first part (A), but the third part (C) does not cover the first part (A). That is, the fixing member is configured to fix a folded state of the mobile terminal, such that the folded state is maintained.

A fixed state by the fixing member may be released by a user input applied to a rear input unit. Hereinafter, a method for releasing a fixed state by the fixing member will be explained. The body of the mobile terminal is composed of a front surface, side surfaces and a rear surface. The flexible display unit 151 is disposed on the front surface, and a case 101 is disposed on the rear surface. One or more rear input units 123a and 123b may be provided on the rear surface. The rear input units 123a and 123b are manipulated so that a user can input a command for controlling an operation of the mobile terminal 100. In this instance, input contents may be variously set.

For instance, the rear input units may be configured to receive a touch input, a push input or a combination thereof. That is, the rear input units may be configured to receive both a touch input and a push input. In some cases, the rear input units may serve as a touch sensor of the flexible display unit 151, and a home key of the mobile terminal.

The rear input units may be disposed at positions adjacent to a left side end and a right side end. Under such configuration, when at least one of the second part (B) and the third part (C) covers the first part (A), the rear input unit disposed on another surface of said at least one may be disposed toward a front surface. For instance, as shown in FIG. 7, in a closed state where the mobile terminal has been bent so that two side ends thereof can face each other, the first rear input unit 123a and the second rear input unit 123b may be disposed toward a front surface.

When at least part of the mobile terminal has been folded, whether to fix the folded state or not is determined by a push input applied to the rear input units disposed toward a front surface. More specifically, the push input may be defined as an input for releasing a fixed folded state by the fixing member. That is, if a push input is applied to the rear input units disposed toward a front surface when the mobile terminal has been folded, a fixed folded state may be released and the body of the mobile terminal may return to a basic state. Accordingly, at least part of the flexible display unit 151 may be exposed to the outside to thus be activated, thereby outputting screen information.

A region, where a fixed state is to be released, may be variable according to a position to which a push input is applied. For instance, as shown in FIG. 7, if a push input applied to the second rear input unit 123b is sensed, the controller 180 releases a fixed state of the third part so that the third part corresponding to the second rear input unit can be converted into a state not to cover the first part. And the controller 180 maintains a fixed state of the second part so that the second part can be continuously in a state to cover the first part. If a push input is simultaneously applied to the first rear input unit 123a and the second rear input unit 123b, a fixed state of the second part and the third part is released, and the closed state is converted into a third open state where none of the second part and the third part covers the first part.

A push input for releasing a fixed folded state may be modified in various manners. For instance, the push input may be modified into a long-touch input which is maintained for a reference time without being released, a knock code input by a plurality of touch inputs matching a preset pattern, a fingerprint input, etc. The rear input units provide a new type of user interface related to fixing a bent state by the fixing member, or related to releasing the fixed state.

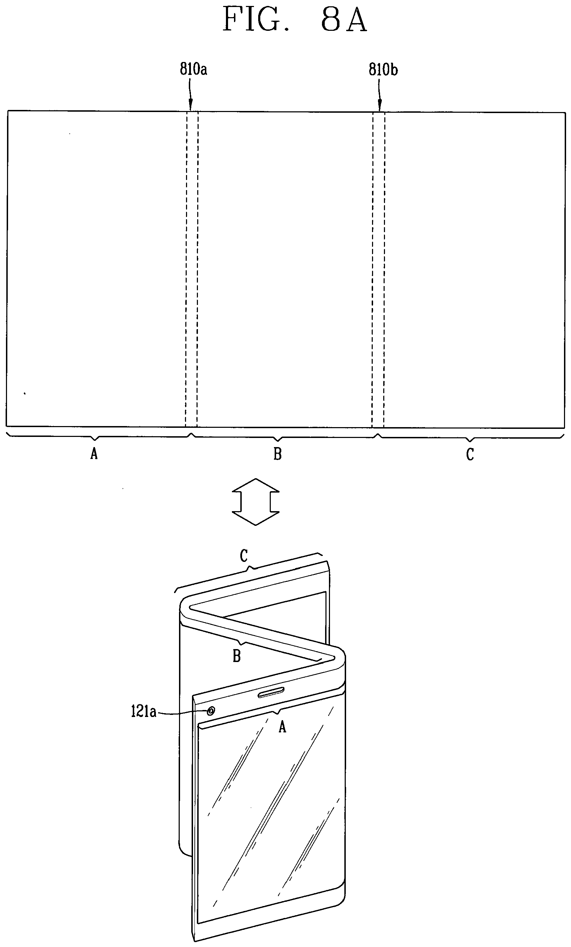

FIG. 8A is a view illustrating an embodiment in which a bending region is preset to a predetermined region in a mobile terminal according to an embodiment of the present invention.

As described hereinbefore, the bending regions 810a and 810b may be preset to predetermined regions among the entire region of a body of a portable electronic device. That is, a user may bend the body of the portable electronic device on the basis of the preset bending regions 810a and 810b.

Herein below, the mobile terminal (portable electronic device) according to the present invention will be described with reference to an embodiment in which a first bending region (810a, a first boundary region) and a second bending region (810b, a second boundary region) are preset to divide the flexible display unit 151 into screen regions (A, B and C) of the same size on the body of the portable electronic device, for convenience of explanation.

Specifically, the flexible display unit 151 may include a first portion (A), a second portion (B) rotatably formed on the basis of a first boundary region (810a) provided at one side of the first portion (A), and a third portion (C) rotatably formed on the basis of a second boundary region 810b provided at one side of the second portion (B).

Referring to an embodiment of FIG. 8A, the first, second and third portions (A, B and C) may be formed in the same size, and the mobile terminal 100 may be configured in a manner that the first portion (A) and the second portion (B) are folded so as not to face each other on the basis of the first boundary region 810a, and the second portion (B) and the third portion (C) are folded so as to face each other on the basis of the second boundary region 810b.

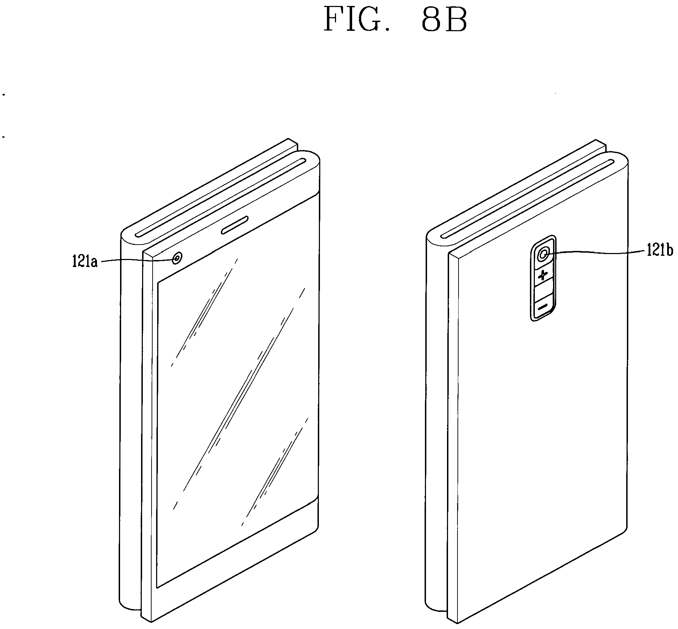

FIGS. 8B is perspective views illustrating various examples in which the display unit is bent according to an embodiment of the present invention.

Referring to FIG. 8B, the mobile terminal 100 is configured in a manner that rear regions of the body corresponding to the first portion (A) and the second portion (B), respectively, can be folded so as to contact each other based on the first boundary region 810a, and the second portion (B) and the third portion (C) can be folded so as to contact each other, based on the second boundary region 810b.

Meanwhile, the regions of the first and second boundary regions 810a and 810b may be divided into a region where a touch input can be sensed and a region where a touch input can not be sensed. As an embodiment, an upper region of the boundary regions 810a and 810b may be defined as a region where a touch input can be sensed, and a lower region of the boundary regions 810a and 810b may be defined as a region where a touch input can not be sensed.

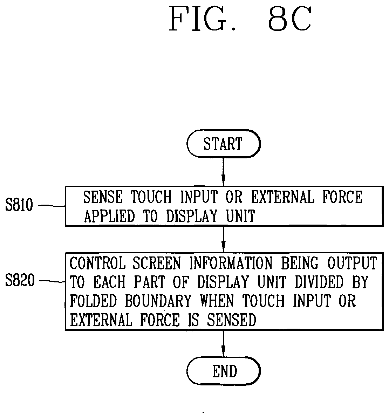

FIG. 8C is a flowchart illustrating a control method of the mobile terminal according to the present invention.

Referring to FIG. 8C, executed is a step (S810) to sense a preset touch input applied to the flexible display unit 151 including a first portion (A), a second portion (B) rotatably formed based on a first boundary region 810a provided at one side of the first portion (A) and a third portion (C) rotatably formed based on the second boundary region 810b provided at one side of the second portion (B), or to sense an external physical force to rotate at least one of the first boundary region 810a and the second boundary region 810b.

Thereafter, executed is a step (S820) to control screen information being output from at least one of the first portion (A), the second portion (B) and the third portion (C), based on sensing of the touch input or the physical force.

Here, the screen information means various types of information which may be output to the display unit 151. As an example, the screen information may be an execution screen of an application, a home screen, a menu screen, a screen corresponding to a function executed by a user's request, a notification screen informing generation of an event, or a lock screen formed to receive a password to release a locked state. And the screen information may be configured by at least one of a text, an image (including an icon), a flash and a video.

Meanwhile, the controller 180 may convert at least one of screen information which has been output to the first portion (A), the second portion (B) and the third portion (C) into preset screen information, based on a preset touch input applied to at least one of the first portion (A), the second portion (B) and the third portion (C).

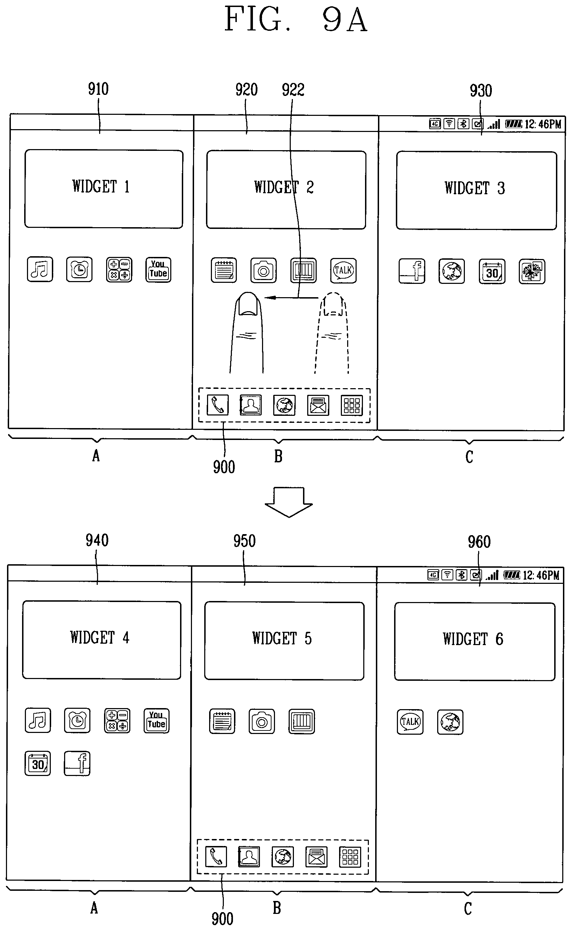

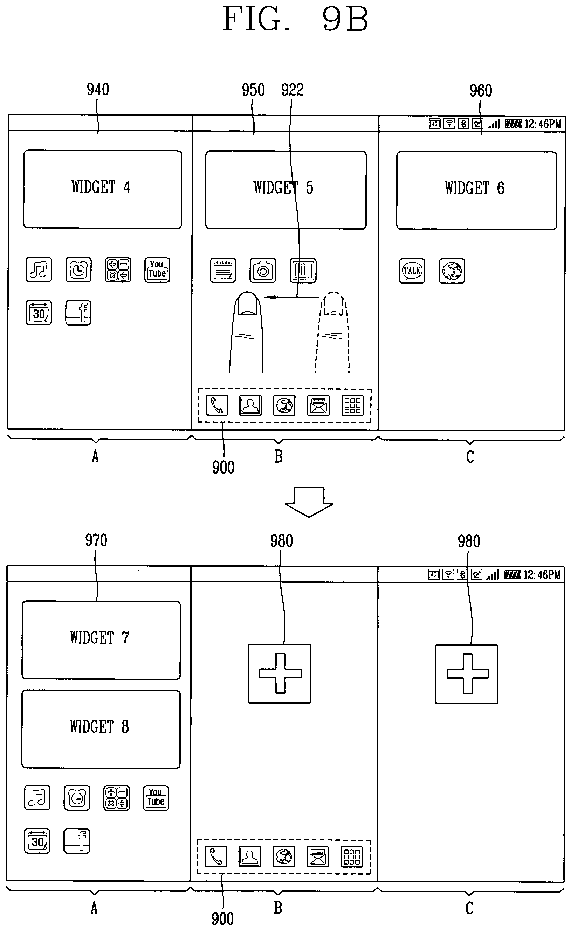

FIGS. 9A and 9B are schematic views illustrating an embodiment in which a page of a home screen is converted according to an embodiment of the present invention.

Referring to FIG. 9A, a preset page of a home screen composed of a plurality of pages may be output to the first, second and third portions (A, B and C), respectively. Specifically, the first page (910) may be output to the first portion (A), the second page (920) may be output to the second portion (B), and the third page (930) may be output to the third portion (C). As an example, a leftward flicking input (922) may be applied to at least one of the portions (A, B and C), or a leftward flicking input (922) may be applied so as to pass through the third portion (C) and second portion (B) or the second portion (B) and first portion (A). As another example, a leftward flicking input (922) may be applied so as to pass through all the portions (A, B and C).

As a result, referring to FIG. 9A, the pages of the home screen which has been output to the first portion (A), the second portion (B) and the third portion (C) may be converted into preset pages of a home screen.

Specifically, a first page (910) which has been output to the first portion (A) may be converted into a fourth page (940), a second page (920) which has been output to the second portion (B) may be converted into a fifth page (950), and a third page (930) which has been output to the third portion (C) may be converted into a sixth page (960). As a result, a fourth page (940) may be output to the first portion (A), a fifth page (950) may be output to the second portion (B), and a sixth page (960) may be output to the third portion (C).

In this instance, icons (900) of a part of applications being output to a lower end of the second portion (B) which is a middle region of the flexible display unit 151 may be fixedly output irrespective of applied flicking input (922).

As another example, a rightward flicking input may be applied to a screen 151 to which the fourth page (940) is output to the first portion (A), the fifth page (950) is output to the second portion (B) and the sixth page (960) is output to the third portion (C).

As a result, the first page (910) may be re-output to the first portion (A), the second page (920) may be re-output to the second portion (B) and the third page (930) may be re-output to the third portion (C). That is, the screen may be returned to the screen shown in FIG. 9A.

Referring to FIG. 9B, a leftward flicking input (922) may be re-applied to the screen (151) to which the fourth page (940) is output to the first portion (A), the fifth page (950) to the second portion (B) and the sixth page (960) to the third portion (C), as in FIG. 9A.

As described hereinbefore, a leftward flicking input (922) may be applied to at least one of each portion (A, B or C), or a leftward flicking input (922) may be applied so as to pass through the third portion (C) and second portion (B) or the second portion (B) and first portion (A). As a further example, a leftward flicking input (922) may be applied so as to pass through all the portions (A, B and C).

As a result, the fourth page (940) which is output to the first portion (A) may be converted into a seventh page (970), as shown in FIG. 9B. Further, when a page of the home screen does not exist any further, an icon (980) which can add a page of the home screen may be output to at least one of the second portion (B) and the third portion (C).

In this instance, icons (900) of part of applications being output to a lower end of the second portion (B) which is a middle region of the flexible display unit 151 may be fixedly output irrespective of the flicking input (922) being applied.

As a further example, as shown in FIG. 9B, a leftward flicking input may be re-applied to the screen 151 to which the seventh page (970) is output to the first portion (A) and the icon (980) for adding a page of home screen to remaining portions (B and C).

As described hereinbefore, a leftward flicking input (922) may be applied to one of each portion (A, B or C), or so as to pass through the third portion (C) and second portion (B) or the second portion (B) and first portion (A). As a further example, a leftward flicking input (922) may be applied so as to pass through all the portions, i.e., the third portion (C), the second portion (B) and the first portion (A).

Thus, the first page (910) may be re-output to the first portion (A), the second page (920) may be re-output to the second portion (B) and the third page (930) may be re-output to the third portion (C). That is, the screen may be returned to the screen shown in FIG. 9A.

Meanwhile, the controller 180 may move an object to one of the portions other than a portion where the object is output, based on a preset touch input applied to an object being output to one of the first portion (A), the second portion (B) and the third portion (C).

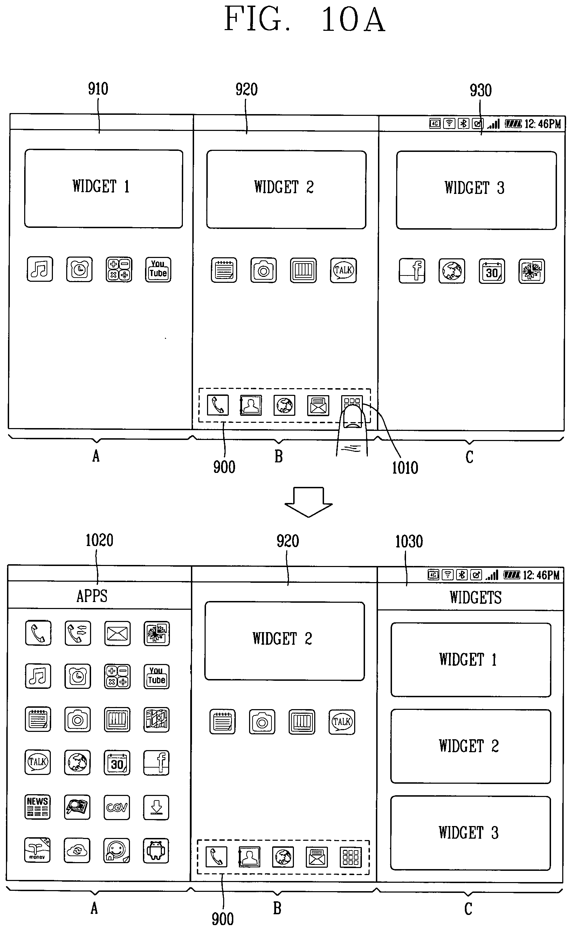

FIGS. 10A through 10C are views illustrating embodiments to move an object to a page of a home screen according to an embodiment of the present invention.

Referring to FIG. 10A, a preset page among screens of a home screen configured by plural pages may be output to the first portion (A), the second portion (B) and the third portion (C). Specifically, the first page (910) may be output to the first portion (A), the second page (920) to the second portion (B), and the third page (930) to the third portion (C).

Thereafter, a user may touch an icon (1010) showing an item of the applications and widgets installed in the terminal 100 among the icons (900) of the applications being output to a lower end of the second portion (B).

Referring to FIG. 10A, screen information (1020) showing collectively icons of applications installed in the mobile terminal 100 may be output to the first portion (A), and screen information (1030) showing collectively icons of widgets installed in the mobile terminal 100 may be output to the third portion (C).

That is, icons corresponding to the applications and widgets being output to pages of each home screen may be output to each portion (B, C) in a distinguished manner by applications and widgets.

As a further example, when a user pushes or touches a home button, or menu or button for turning back, the screen may be returned to the screen as shown in FIG. 10A.

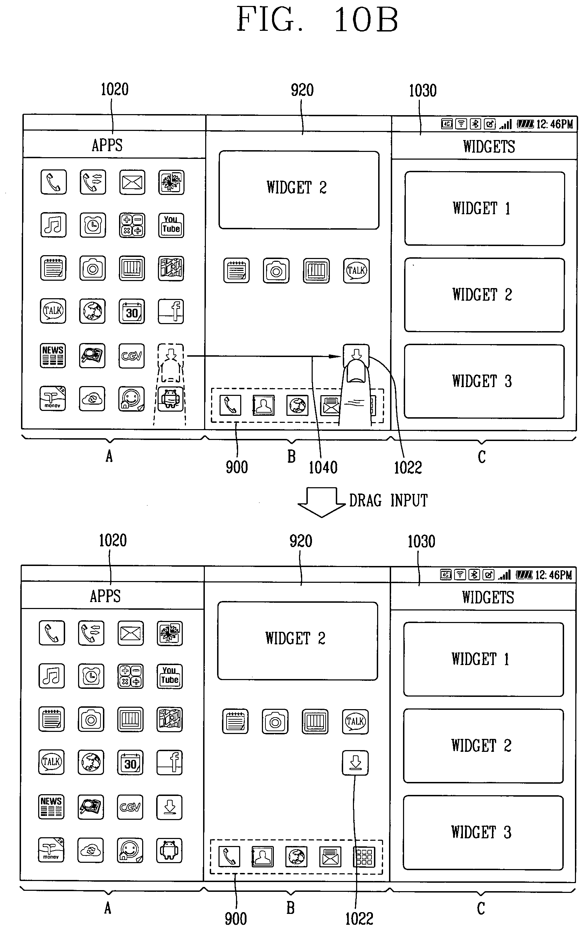

Referring to FIG. 10B, a user may touch and select one of icons (1022) corresponding to an application being output to the first portion (A), and then apply a drag input (1040) to one region of the second portion (B) to which a home screen page is output, as shown in FIG. 10A.

As a result, referring to FIG. 10B, an icon (1022) of the selected application may be output to a home screen page of the second portion (B). As an example, the icon (1022) moves to the second portion (B) so as not to be output to the first portion (A) any further, or may be continuously output to the first portion (A).

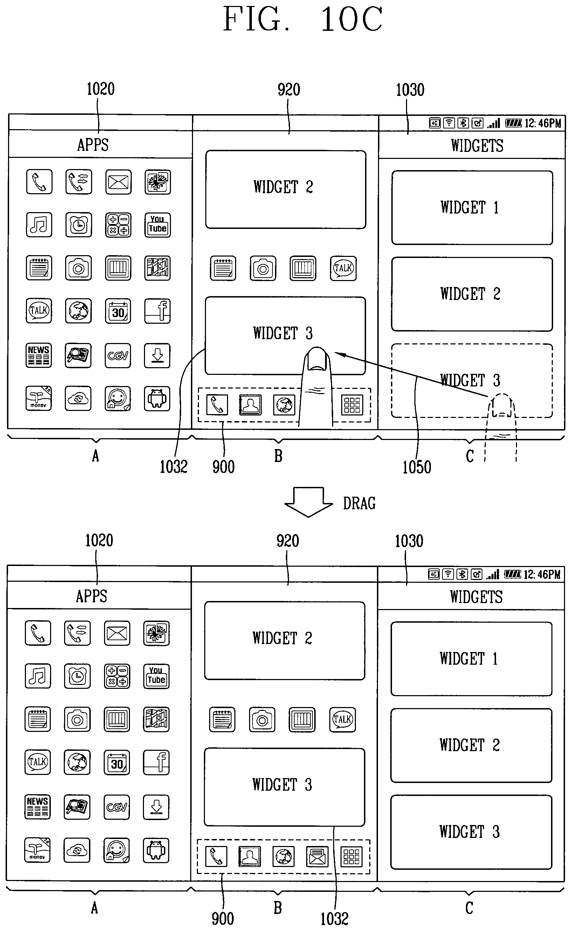

Referring to FIG. 10C, a user may touch and select one of icons (1032) corresponding to widgets being output to the third portion (C), and then apply a drag input (1050) to one region of the second portion (B) to which a home screen page is output, as shown in FIG. 10A.

As a result, referring to FIG. 10B, an icon (1032) of the selected widget may be output to a home screen page of the second portion (B). As an example, the icon (1032) moves to the second portion (B) so as not to be output to the third portion (C) any further, or may be continuously output to the third portion (C).

Meanwhile, the controller 180 may output preset screen information to a portion where the preset touch input is applied and output first screen information and second screen information, respectively, to a portion other than the portion where the preset touch input is applied based on a preset touch input applied to one of the first portion (A), the second portion (B) and the third portion (C), in a state that the first screen information, the second screen information and the third screen information are output to the first portion (A), the second portion (B) and the third portion (C), respectively.

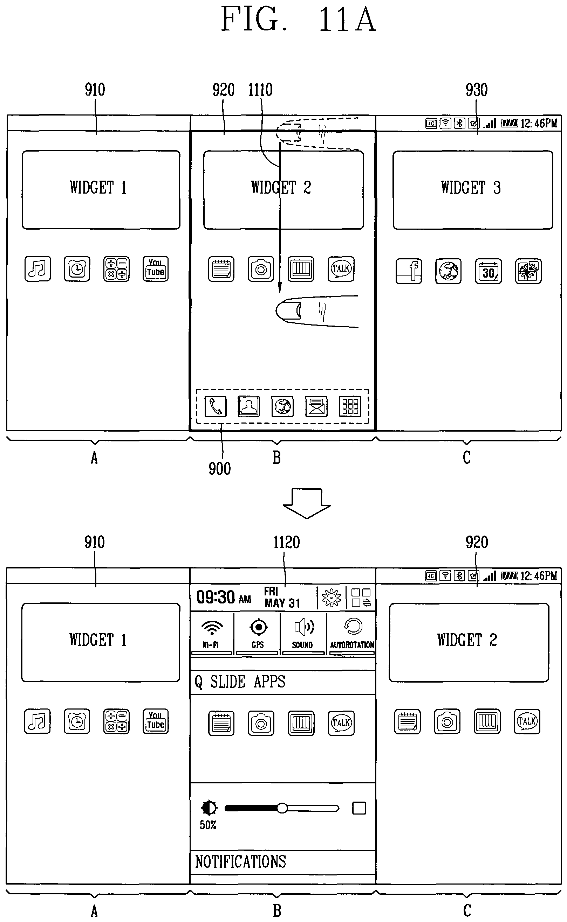

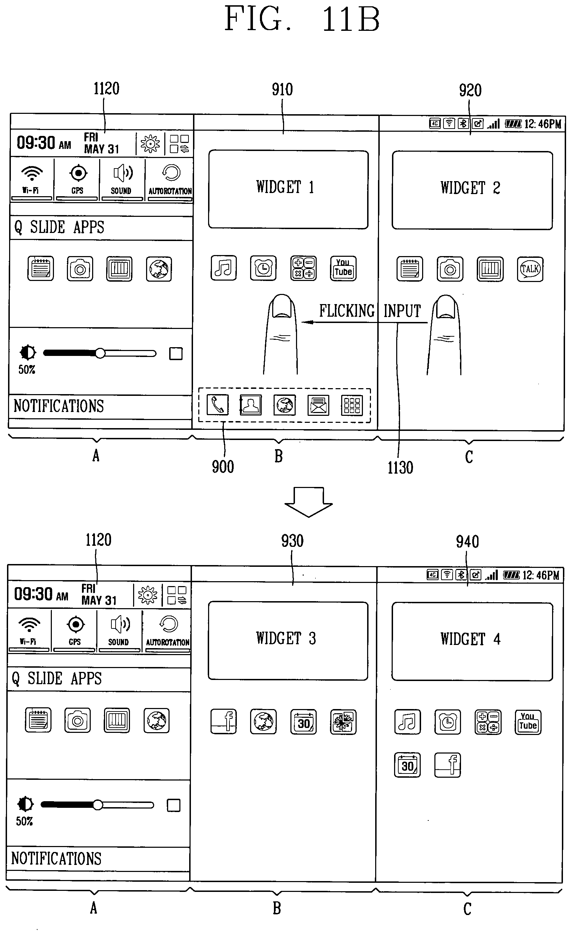

FIGS. 11A and 11B are views illustrating embodiments of a screen conversion related to a page of a home screen and a notification panel according to an embodiment of the present invention.

Referring to FIG. 11A, a preset page among a screen of a home screen configured by plural pages may be output to the first portion (A), the second portion (B) and the third portion (C), respectively. Specifically, the first page (910) may be output to the first portion (A), the second page (920) may be output to the second portion (B) and the third page (930) may be output to the third portion (C).

Thereafter, a user may apply a drag input (1110) to open a state bar to the second portion (B). As an example, when a user touches a state bar region at an upper end of the second portion (B) to apply the drag input (1110), an image effect to indicate the application of the touch may be output. Specifically, a visual effect flickering around the second portion (B) is added, or an edge of the second portion (B) may be output thickly.

As a result, referring to FIG. 11A, screen information (1120, notification panel) indicating a state of the mobile terminal 100 may be output to the second portion (B) to which the drag input (1110) is applied. That is, a state bar (notification panel) may be output to the second portion (B).

Further, the first page (910) may be output to the first portion (A) and the second page (920) may be output to the third portion (C). That is, the first page (910) and the second page (920) may be preferentially output to the remaining portions (A, C) other than the second portion (B) where the state bar is output, and to this end, the third page (930) being output to the third portion (C) may be converted into the second page (920).

Referring to FIG. 11B, when a user drags a state bar region at an upper end of the first portion (A), as in FIG. 11A, screen information (1120) indicating a state of the mobile terminal 100 may be output to the first portion (A). That is, a state bar may be output to the first portion (A).

As a result, the first page (910) may be output to the second portion (B) and the second page (920) may be output to the third portion (C). That is, the first page (910) and the second page (920) may be preferentially output to the remaining portion other than the first portion (A) where the state bar is output, and to this end, the second page (920) being output to the second portion (B) is converted into the first page (910) and the third page (930) being output to the third portion (C) is converted into the second page (920) (refer to FIG. 11A).

Thereafter, a user may apply a flicking input (1130) to turn over a page of a home screen. As an example, a flicking input (1130) may be applied either to the second portion (B) or the third portion (C), or the flicking input (1130) may be applied to pass through the second portion (B) and the third portion (C).

According to this, referring to FIG. 11B, the third page (930) may be output to the second portion (B) and the fourth page (940) may be output to the third portion (C). That is, when a flicking input (1130) to turn over a page of a home screen is applied to the remaining portions (B, C) other than the first portion (A) where the state bar is output, a page of a home screen is output in a preset order. Specifically, the first page (910) being output to the second portion (B) is converted into the third page (930) and the second page (920) being output to the third portion (C) is converted into the fourth page (940).

Meanwhile, the controller 180 may output 1-1 preset screen information to the first portion (A) and the first and second screen information to the second and third portions (B and C), respectively, based on a preset touch input applied to one of the first portion (A), the second portion (B) and the third portion (C), in a state that the first screen information, the second screen information and the third screen information are output to the first portion (A), the second portion (B) and the third portion (C), respectively.

Thereafter, the controller 180 may output the 2-1 preset screen information to the second portion (B) and the first screen information to the third portion (C), based on re-application of the preset touch input in a state that the 1-1 screen information, the first screen information and the second screen information are output to the first, second and third portions (A, B and C), respectively.

Further, the controller 180 may output the preset 3-1 screen information to the third portion (C), based on re-application of the preset touch input in a state that the 1-1 screen information, the 2-1 screen information and the first screen information are output to the first, second and third portions (A, B and C), respectively.

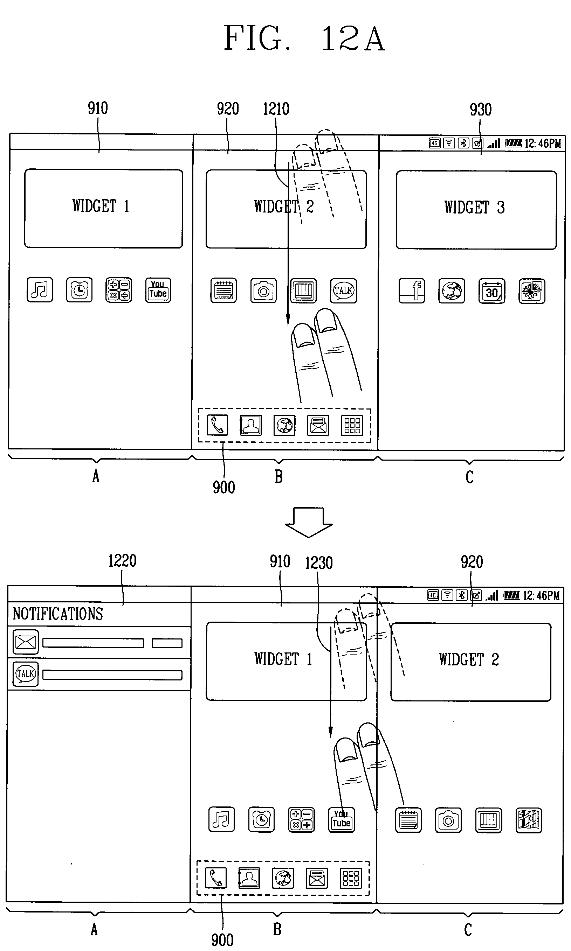

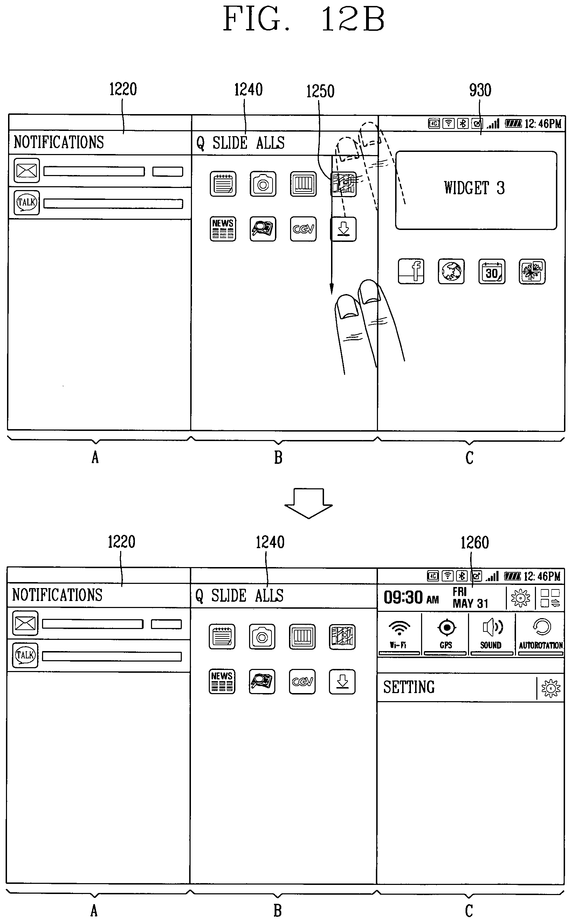

FIGS. 12A and 12B are views illustrating embodiments to divide and provide information output from a notification panel according to an embodiment of the present invention.

Referring to FIG. 12A, a preset page of a home screen composed of plural pages may be output to the first, second and third portions (A, B and C), respectively. Specifically, the first page (910) may be output to the first portion (A), the second page (920) may be output to the second portion (B) and the third page (930) may be output to the third portion (C).

Thereafter, a user may apply a drag input (1210) using two fingers to open a state bar (a notification panel) to an arbitrary region of the state bar. As an example, it is possible to apply a drag input (1210) using two fingers either to a state bar region at upper end of each portion (A, B or C), or to a state bar region at upper end of each boundary region (A and B, or B and C).

Referring to FIG. 12A, screen information (1220) informing an event generated in the mobile terminal 100 may be output to the first portion (A). Further, the second page (920) which has been output to the second portion (B) may be converted into the first page (910), and the third page (930) which has been output to the third portion (C) may be converted into the second page (920).

As a result, the screen information (1220) informing an event generated in the mobile terminal 100 may be output to the first portion (A), the first page (910) may be output to the second portion (B), and the second page (920) may be output to the third portion (C). That is, the first page (910) and the second page (920) are preferentially output to the portions (B, C) other than the portion (A) to which the event information (1220) has been output.

In this instance, the event generated in the mobile terminal 100 may be a message reception, a call signal reception, a missed call, an alarm, a schedule reminder, an e-mail reception, and an information reception via applications.

Subsequently, a user may re-apply a drag input (1230) using two fingers outputting a state bar to an arbitrary region of the state bar. As an example, it is possible to re-apply a drag input (1230) using two fingers to a state bar region at an upper end of the portions (A, B and C), or a state bar region at an upper end of the boundary regions (A and B, or B and C).

Thus, referring to FIG. 12B, screen information (1240) showing an icon of an executable application may be output to the second portion (B). Further, the second page (920) which has been output to the third portion (C) may be converted into the first page (910).

As a result, screen information (1220) informing an event generated in the mobile terminal 100 may be output to the first portion (A), screen information (1240) showing an icon of an executable application may be output to the second portion (B), and the first page (910) may be output to the third portion (C). That is, the first page (910) is preferentially output to the portion (C) other than the portions (A, B) to which the event information (1220) and the icon of the application have been output.

Subsequently, a user may re-apply a drag input (1250) using two fingers outputting a state bar to an arbitrary region of the state bar. As an example, it is possible to re-apply a drag input (1250) using two fingers to a state bar region at an upper end of the portions (A, B and C), or a state bar region at an upper end of the boundary regions (A and B, or B and C).

Thus, referring to FIG. 12B, screen information (1260) related to setting of a state of the mobile terminal 100 may be output to the third portion (C). As a result, screen information (1220) informing an event generated in the mobile terminal 100 may be output to the first portion (A), screen information (1240) showing an icon of an executable application may be output to the second portion (B), and screen information (1260) related to setting of a state of the mobile terminal 100 may be output to the third portion (C). That is, information that is output to the notification panel may be separately output to each portion. As shown in FIGS. 12A and 12B, preset screen information (1220, 1240, 1260) are drag input using two fingers and may be output to a portion where the state bar is output. Specifically, when a user outputs the state bar on the third portion (C) by applying a drag input using two fingers, screen information (1220) informing an event generated in the mobile terminal 100 may be output to the third portion (C).

Meanwhile, the controller 180 may re-output the first screen information, the second screen information and the third screen information to the first portion (A), the second portion (B) and the third portion (C), respectively, based on a preset touch input applied to at least one of the first portion (A), the second portion (B) and the third portion (C), in a state that the 1-1 screen information, the 2-1 screen information and the 3-1 screen information are output to the first portion (A), the second portion (B) and the third portion (C), respectively.

Further, the controller 180 may re-output the first screen information to the portion to which the preset touch input is applied, based on a preset touch input applied to at least one of the first portion (A), the second portion (B) and the third portion (C), in a state that the 1-1 screen information, the 2-1 screen information and the 3-1 screen information are output to the first portion (A), the second portion (B) and the third portion (C), respectively.

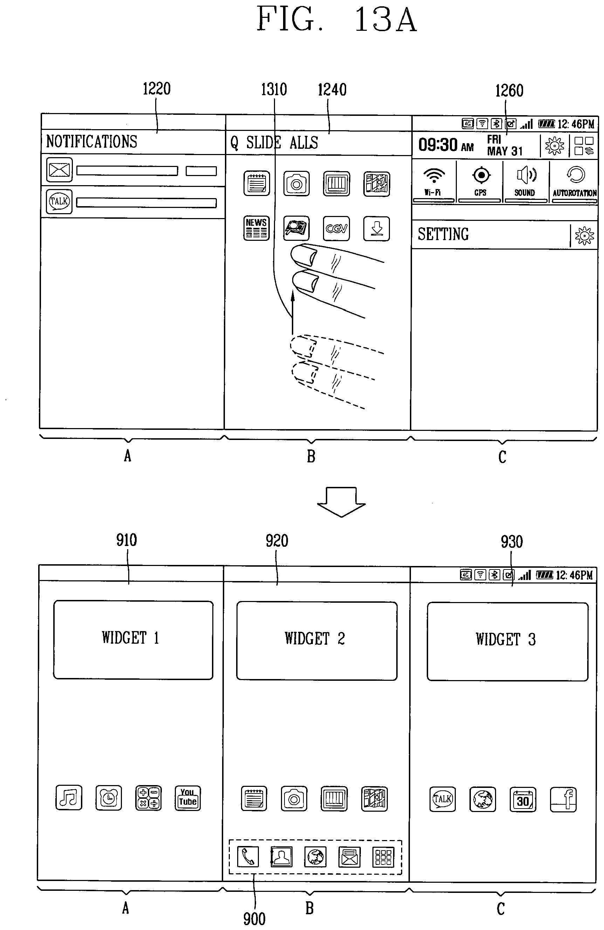

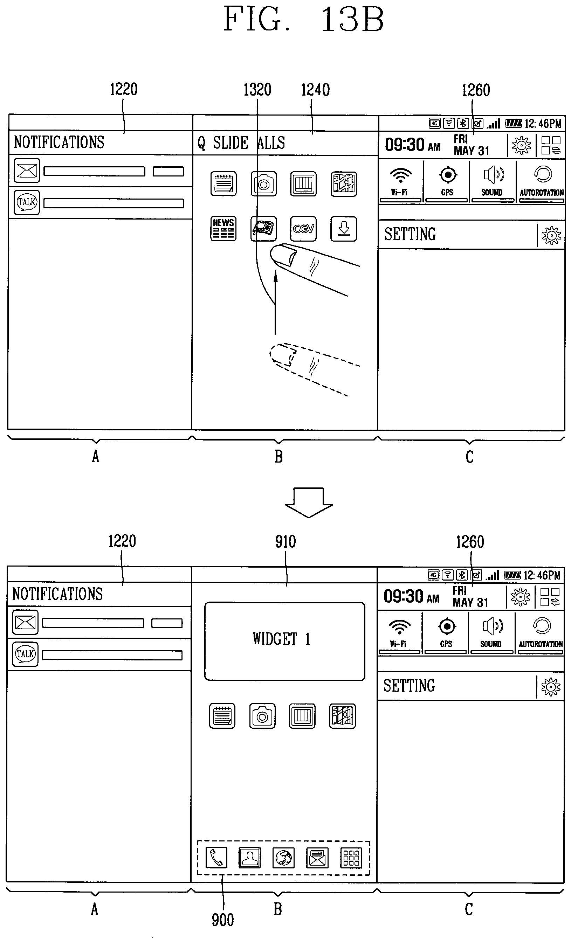

FIGS. 13A and 13B are views illustrating embodiments to return to a previous state in a state that information has been provided as in FIGS. 12A and 12B.

Referring to FIG. 13A, a drag input (1310) using two fingers may be upwardly applied to one of the first portion (A), the second portion (B) and the third portion (C) in a state that the screen information (1220) informing an event generated in the mobile terminal 100 is output to the first portion (A), the screen information (1240) showing an icon of an executable application is output to the second portion (B), and the screen information (1260) related to setting of a state of the mobile terminal 100 is output to the third portion (C).

Subsequently, referring to FIG. 13A, all the preset screen information (1220, 1240 and 1260) are pushed upwardly to the state bar, and pages (910, 920 and 930) of the home screen may be re-output. Specifically, the first page (910) may be re-output to the first portion (A), the second page (920) may be re-output to the second portion (B), and the third page (930) may be re-output to the third portion (C). That is, the screen may be returned to the screen shown in FIG. 12A.

Referring to FIG. 13B, a drag input (1320) using a single finger may be applied upwardly to one of the first portion (A), the second portion (B) and the third portion (C) in a state that the screen information (1220) informing an event generated in the mobile terminal 100 is output to the first portion (A), the screen information (1240) showing an icon of an executable application is output to the second portion (B) and the screen information (1260) related to setting of a state of the mobile terminal 100 is output to the third portion (C).

Thus, referring to FIG. 13B, the screen information (1240) which has been output to the second portion (B) to which the drag input (1320) is applied is pushed upwardly to the state bar, and the first page (910) may be re-output to the second portion (B).

Meanwhile, the controller 180 may execute a function corresponding to an object on one of the first portion (A), the second portion (B) and the third portion (C), based on a preset touch input applied to the object which has been output to one of the first portion (A), the second portion (B) and the third portion (C).

Further, the controller 180 may terminate the execution of the function, based on the preset touch input applied to a portion where the function corresponding to the object is executed.

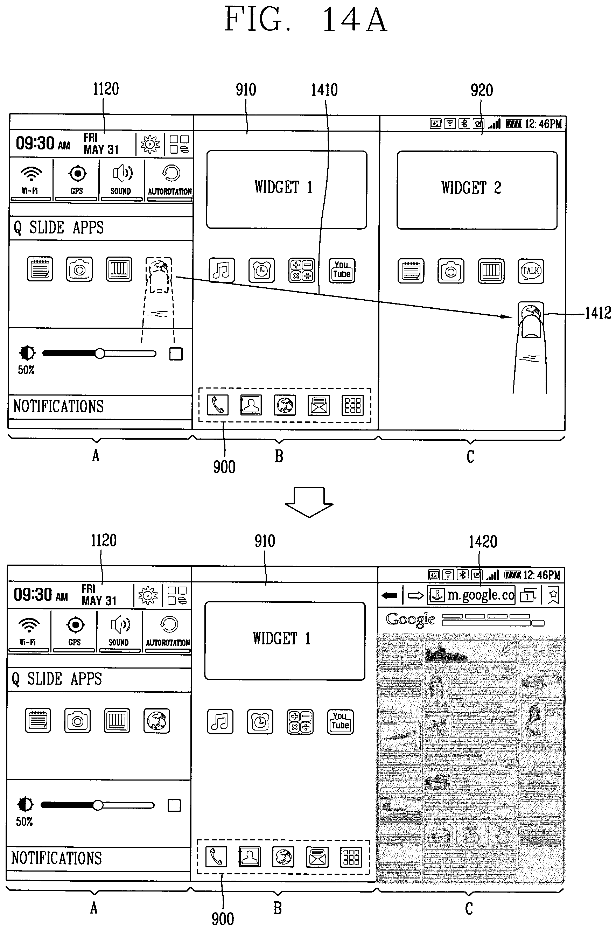

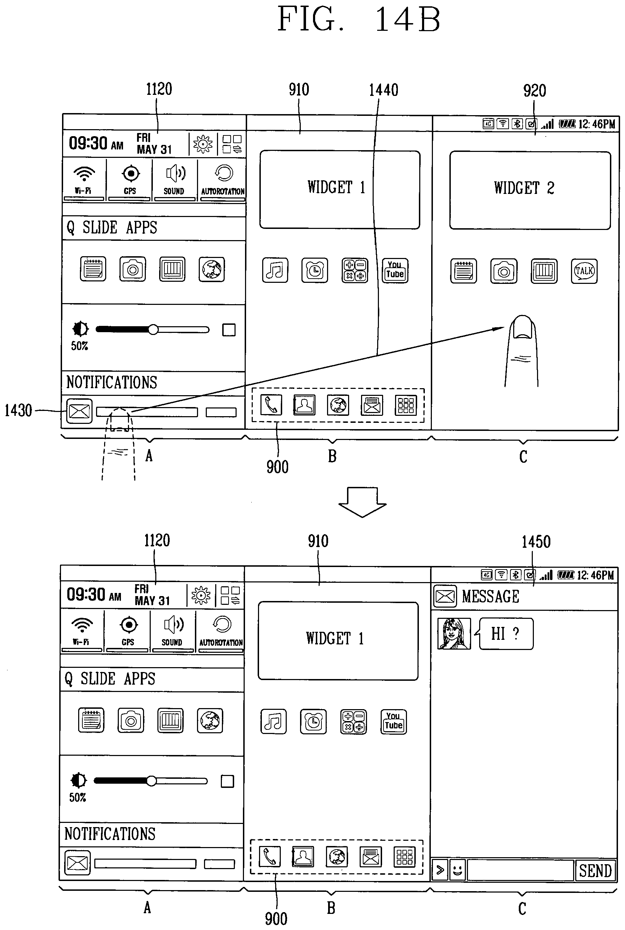

FIGS. 14A and 14B are views illustrating embodiments to execute a function of an object which has been output to a notification panel according to an embodiment of the present invention.

Referring to FIG. 14A, as in FIG. 11B, an input (1410) to drag the icon (1412) of the application which has been output to the first portion (A) toward the third portion (C) may be applied, in a state that the screen information (1120) informing a state of the mobile terminal 100 is output to the first portion (A), the first page (910) is output to the second portion (B) and the second page (920) is output to the third portion (C).

As a result, referring to FIG. 14A, the application may be executed at the third portion (C). As an example, when an internet icon (1412) which has been output to the first portion (A) is dragged toward the third portion (C), an execution screen (1420) may be output to the third portion (C).

Referring to FIG. 14B, as in FIG. 11B, an input (1440) to drag an icon (1430) corresponding to an event which has been output to the first potion (A) toward the third portion (C) may be applied, in a state that the screen information (1120) informing a state of the mobile terminal 100 is output to the first portion (A), the first page (910) is output to the second portion (B) and the second page (920) is output to the third portion (C).

Thus, referring to FIG. 14B, screen information (1450) related to the generated event may be output to the third portion (C). As an example, when an icon (1430) corresponding to a message reception notification which has been output to the first portion (A) is dragged to the third portion (C), a message reception screen (1450) may be output to the third portion (C).

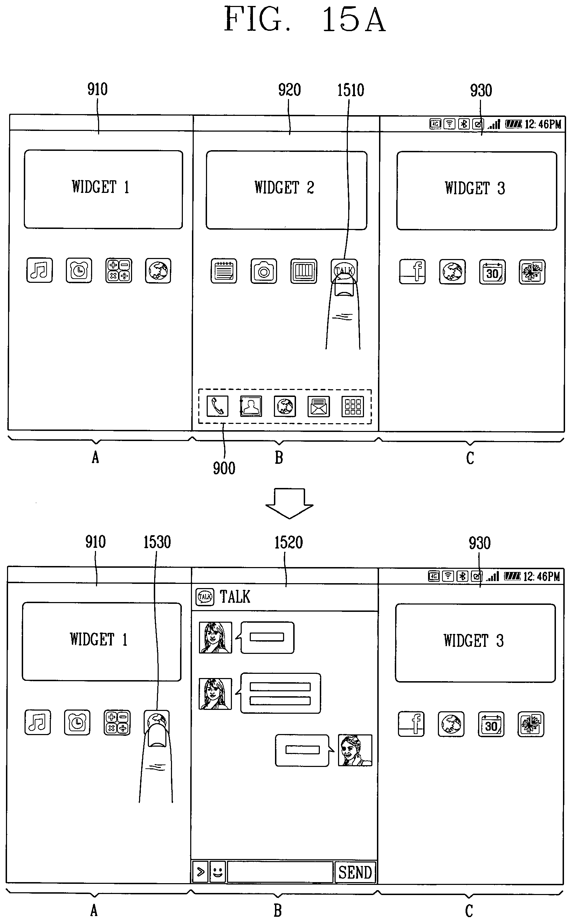

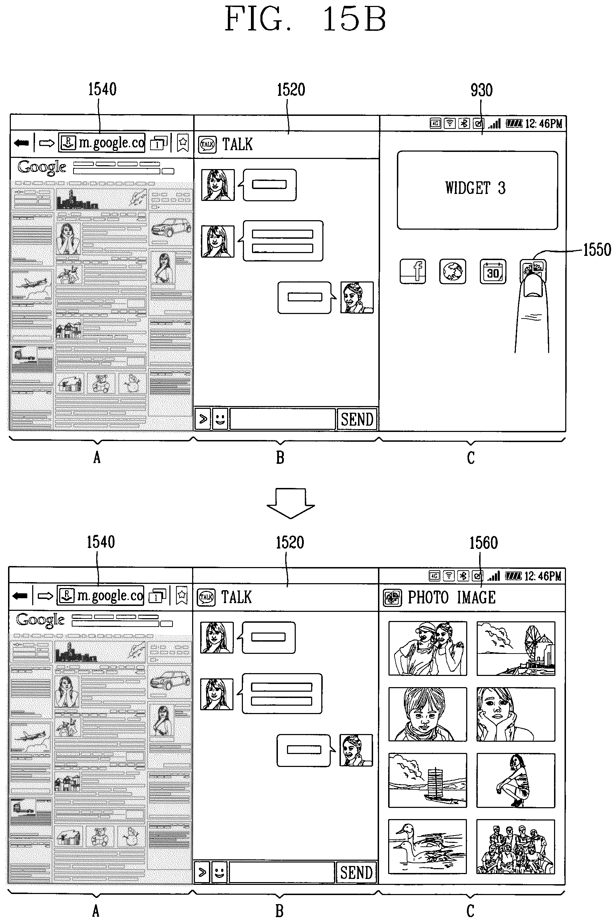

FIGS. 15A and 15B are views illustrating embodiments to execute a function of an object which has been output to a page of a home screen according to an embodiment of the present invention.

Referring to FIG. 15A, a preset page among screens of a home screen configured by plural pages may be output to the first portion (A), the second portion (B) and the third portion (C), respectively. Specifically, the first page (910) may be output to the first portion (A), the second page (920) may be output to the second portion (B), and the third page (930) may be output to the third portion (C). In this instance, a user may touch and select an icon (1510) of an application which has been output to the second page (920).

Thus, referring to FIG. 15A, the application may be executed on the second portion (B). As an example, when a user touches and selects an icon (1510) of a messenger application which has been output to the second page (920), an execution screen of the corresponding messenger is output to the second portion (B).

Thereafter, a user may touch and select an icon (1530) of an application being output to the first page (910).

Thus, referring to FIG. 15B, the application may be executed on the first portion (A). As an example, when a user touches and selects an icon (1530) of the internet which has been output to the first page (910), an execution screen (1540) of the internet is output to the first portion (A).

Similarly, a user may touch and select an icon (1550) of the application which has been output to the third page (930).

Thus, referring to FIG. 15B, the application may be executed on the third portion (C). As an example, when a user touches and selects a gallery (a photo album) icon (1550) which has been output to the third page (910), an execution screen (1560) of the photo album is output to the third portion (C).

Meanwhile, the controller 180 may rearrange each screen information which has been output to the first portion (A), the second portion (B) and the third portion (C) to one of the first portion (A), the second portion (B) and the third portion (C), based on a preset touch input being applied to at least one of the first portion (A), the second portion (B) and the third portion (C).

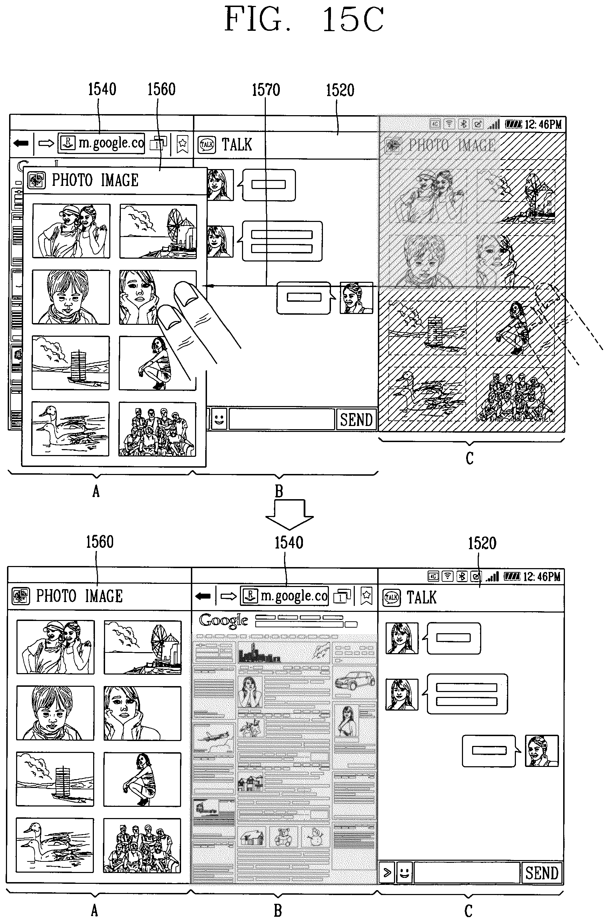

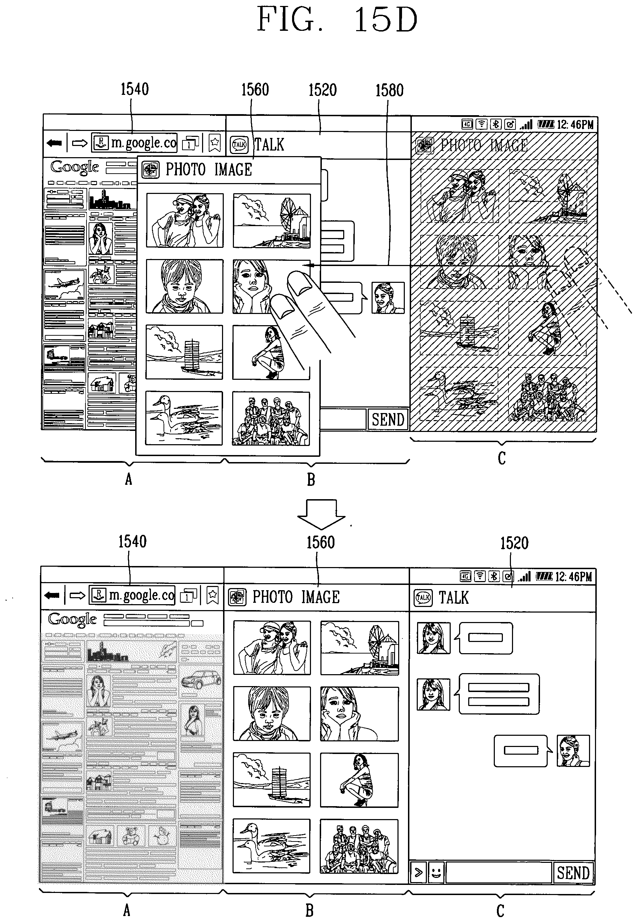

FIGS. 15C and 15D are views illustrating embodiments to change a position of screen information which has been output to each portion according to an embodiment of the present invention.

Referring to FIG. 15C, as in FIG. 15B, an input (1570) to change an output position of the execution screens (1520, 1540 and 1560) may be applied, in a state that the execution screen (1540) of the internet is output to the first portion (A), the execution screen (1520) of the messenger is output to the second portion (B), and the execution screen (1560) of the photo album is output to the third portion.

As an example, when a user applies a long touch input using two fingers to an execution screen (1560) of the photo album, the corresponding execution screen (1560) may be selected. Thereafter, a user may apply an input (1570) to drag the selected execution screen (1560) to the first portion (A).

Referring to FIG. 15C, an execution screen (1560) of the selected photo album is moved and output to the first portion (A). As a result, the execution screen (1540) of the internet which has been output to the first portion (A) is moved to the second portion (B), and the execution screen (1520) of the messenger which has been output to the second portion (B) is moved to the third portion (C) to be output sequentially.

Referring to FIG. 15D, when a user applies a long touch input using two fingers to the execution screen (1560) of the photo album in a state that the execution screen (1540) of the internet is output to the first portion (A), the execution screen (1520) of the messenger is output to the second portion (B), and the execution screen (1560) of the photo album is output to the third portion (C), the corresponding execution screen (1560) may be selected, as in FIG. 15B. Consecutively, a user may apply an input (1580) to drag the selected execution screen (1560) to a boundary region of the first portion (A) and the second portion (B).

Referring to FIG. 15D, the execution screen (1560) of the selected photo album may be moved and output to the second portion (B). As a result, the execution screen (1520) of the messenger being output to the second portion (B) may be sequentially moved to be output to the third portion (C).

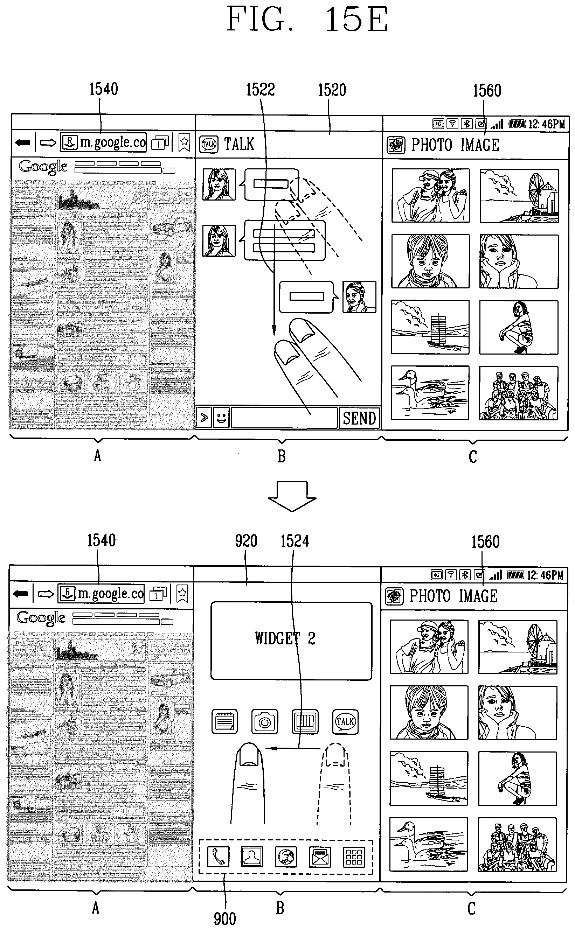

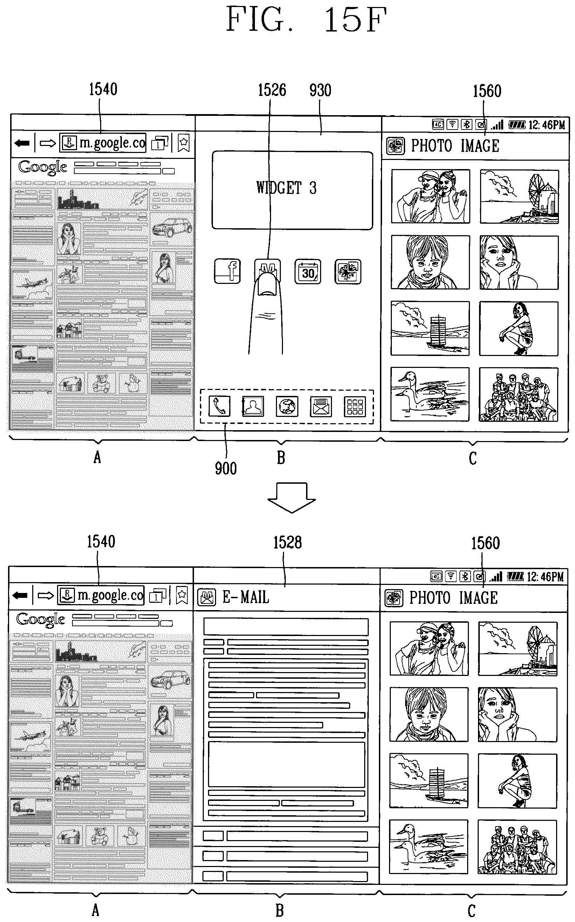

FIGS. 15E and 15F are views illustrating embodiments to terminate a function of an object according to an embodiment of the present invention.

Referring to FIG. 15E, a user may apply downwardly a drag input (1522) using two fingers to the execution screen (1520) of the messenger in a state that the execution screen (1540) of the internet is output to the first portion (A), the execution screen (1520) of the messenger is output to the second portion (B), and the execution screen (1560) of the photo album is output to the third portion (C) as in FIG. 15B.

Thus, referring to FIG. 15E, the messenger application being executed on the second portion (B) to which the drag input (1522) is applied may be terminated, and the second page (920) which is a home screen page previously output may be re-output. Consecutively, a user may apply a flicking input (1524) to the second page (920).

As a result, referring to FIG. 15F, the third page (930) which is preset as a next page of the second page (920) may be output to the second portion (B). Consecutively, a user may touch and select an icon (1526) of a mail application which has been output to the third page (930).

Thus, referring to FIG. 15F, an execution screen (1528) of the mail application may be output to the second portion (B).

Meanwhile, when an operation to return a folding state so that the first, second and third portions (A, B and C) can be disposed toward the user, is sensed, in a state that the first boundary (810a) and the second boundary (810b) are folded inward or outward so that only one of the first, second and third portions (A, B and C) can be disposed toward the user, the controller 180 may enlarge the screen information so that the screen information being output to the portion that is disposed toward the user in a folded state can be output throughout the first, second and third portions (A, B and C).

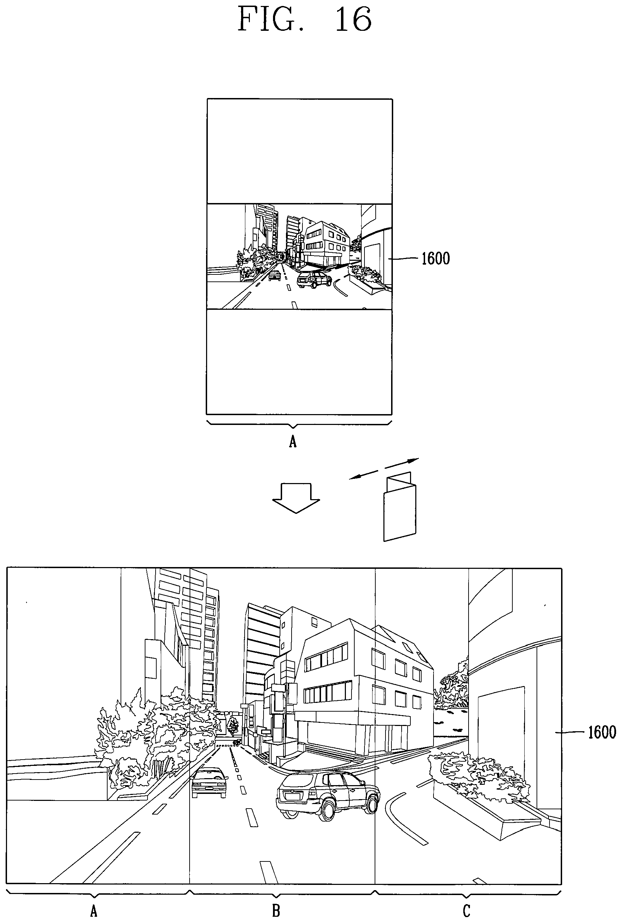

FIG. 16 is a view illustrating an embodiment to control screen information being output by an operation to unfold a folded display unit according to an embodiment of the present invention.

Referring to FIG. 16, the first boundary (810a) and the second boundary (810b) may be folded inward or outward so that the first portion (A) can be faced to the user, as in FIG. 8B. When a video is reproduced in such a state, an execution screen (1600) of the video may be output to the first portion (A).

Consecutively, when an operation to unfold a folded terminal 100 is sensed, the execution screen (1600) of the video being output to the first portion (A) may be output throughout the first, second and third portions (A, B and C), as shown in FIG. 16.

Meanwhile, when an operation to fold inwardly or outwardly one of the first boundary region (810a) and the second boundary region (810b) is sensed, in a state that the first screen information is output throughout the first, second and third portions (A, B and C), the controller 180 may control the first screen information to be output through one region that is divided based on the folded boundary region and the preset second screen information to be output to the other region that is divided by the first region.

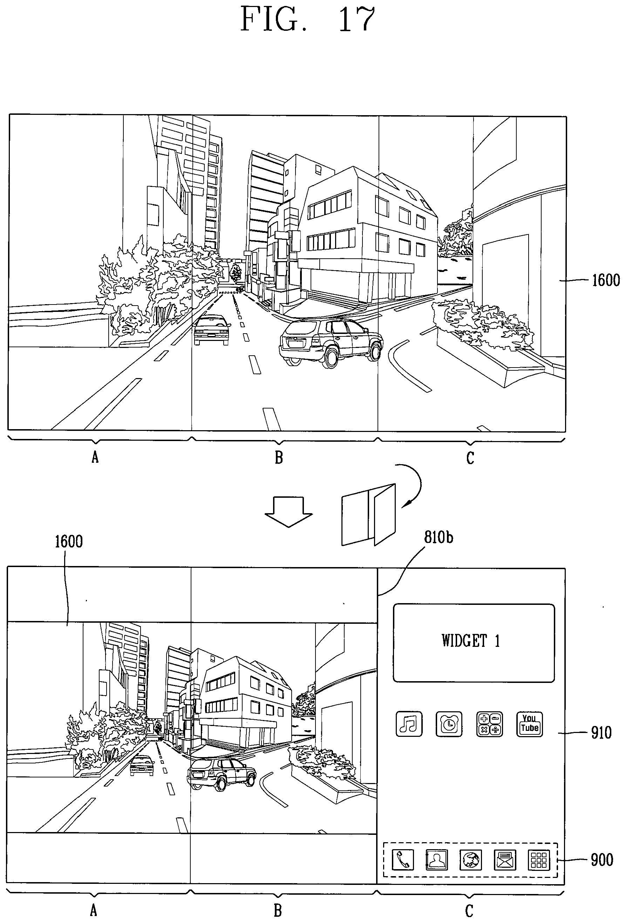

FIG. 17 is a view illustrating an embodiment to control screen information being output by an operation to fold part of a display unit according to an embodiment of the present invention.

Referring to FIG. 17, an operation to fold the second boundary (810b) inward the screen (151) may be applied in a state that the execution screen (1600) of a video is output throughout the first, second and third portions (A, B and C), as in FIG. 16.

As a result, referring to FIG. 17, the screen 151 may be divided into a first region (A, B) and a second region (C), based on the folded second boundary region (810b). Specifically, the first region may include the first and second portions (A and B), and the second region may include the third portion (C).

Further, the execution screen (1600) may be pushed out to the left and output to the first region (A and B) which is a large region and the preset screen information may be output to the second region (C) which is a narrow region. As an example, a page (910) of the home screen or a notification screen may be output to the second region (C).

As another example, a user may apply a flicking or drag input using two fingers to the second region (C) in a downward direction in a state that the execution screen (1600) of a video is output to the first region (A and B) and the first page (910) of a home screen is output to the second region (C). As a result, the first page (910) of a home screen being output to the second region (C) disappears, and the execution screen (1600) of the video may be re-output throughout the entire portions (A, B and C) in an enlarged manner.

As still another example, the screen may be converted, as shown in FIG. 17, in a case where an operation to fold the second boundary region (810b) toward outside of the screen 151 is applied.

As a still further example, when an operation to fold the first boundary region (810a) inside or outside of the screen 151 is applied, the screen 151 may be divided into a first region (A) and a second region (B and C) based on the folded first boundary region (810a). Specifically, the first region may include a first portion (A), and the second region may include a second portion (B) and a third portion (C).

Further, the execution screen (1600) of the video may be moved to the right and output to the second region (B and C) which is a large region and the preset screen information may be output to the second region (A) which is a narrow region. As an example, a page (910) of the home screen or a notification screen may be output to the second region (C).

As another example, a user may apply a flicking or drag input using two fingers to the first region (A) in a downward direction, in a state that the first page (910) of a home screen is output to the first region (A) and the execution screen (1600) of the video is output to the second region (B and C). As a result, the first page (910) of a home screen being output to the first region (A) disappears, and the execution screen (1600) of the video may be re-output throughout the entire portions (A, B and C) in an enlarged manner.

Meanwhile, when an operation to unfold the folded state so that the first, second and third portions (A, B and C) can be disposed toward the user, is sensed, in a state that the first boundary (810a) and the second boundary (810b) are folded inward or outward so that only one of the first, second and third portions (A, B and C) can be disposed toward the user, the controller 180 may control the first screen information being output to the portion that is disposed toward the user in the folded state, and the second and third screen information preset in association with the first screen information to be output to the first, second and third portions (A, B and C), respectively.

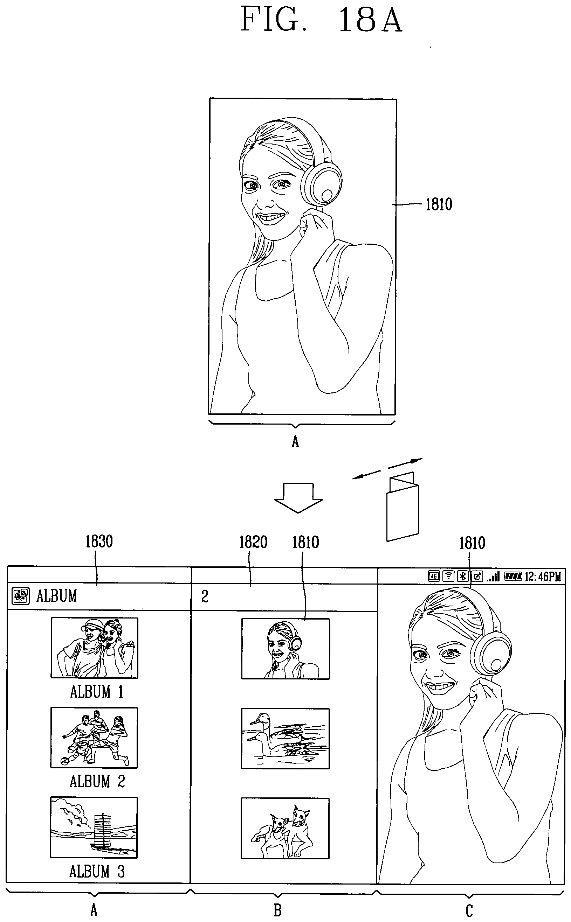

FIGS. 18A through 18C are views illustrating embodiments in which related screen information is output gradationally by an operation to unfold a folded display unit according to an embodiment of the present invention.

Referring to FIG. 18A, a user may output a first image (1810) to the first portion (A) in a state that the mobile terminal 100 is folded so that the first portion (A) may be exposed. Consecutively, a user may apply an operation to open a folded portion to the mobile terminal 100.

As a result, referring to FIG. 18A, the first image (1810), and screen information (1820, 1830) gradationally showing a category including the first image (1810) may be output.

Specifically, the first image (1810) which has been output to the first portion (A) may be moved to the right and output to the third portion (C), and the screen information (1820) on an album including the first image (1810) may be output to the second portion (B). That is, thumbnails of images included in an album including the first image (1810) may be output to the second portion (B). Further, an entire album list (1830) may be output to the first portion (A).

According to the embodiment of FIG. 18A, screen information (1820, 1830) on a category including the first image (1810) may be naturally output to the left, while the mobile terminal 100 is being unfolded.

Meanwhile, when the mobile terminal 100 is refolded so that only one portion (A and B or B and C) can be exposed to outside, the first image (1810) and the screen information (1820, 1830) on a category including the first image (1810) may be partially output.

As an example, when the first boundary region (810a) is folded toward outside of the screen 151, the screen information (1820) on an album including the first image (1810) may be output to the second portion (B), and the first image (1810) may be output to the second portion (B).

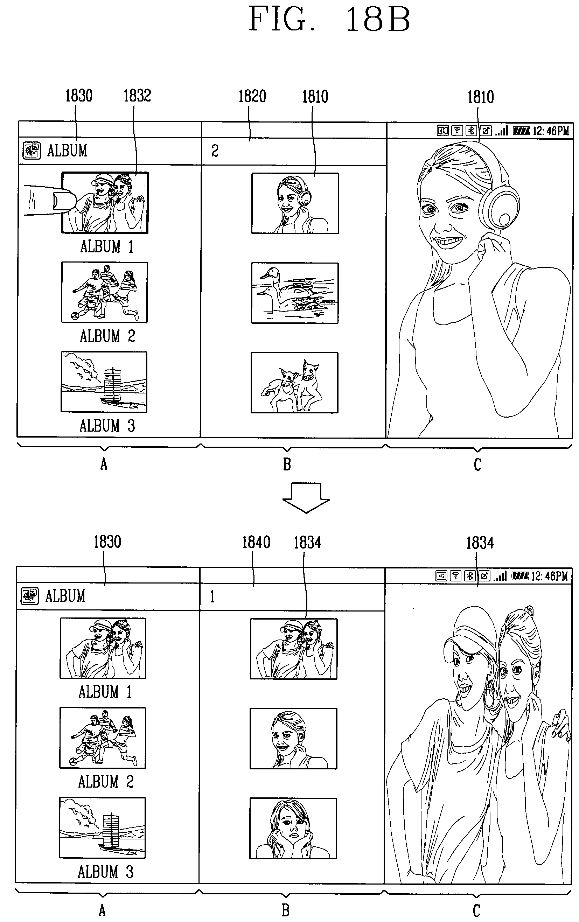

Referring to FIG. 18B, a touch input to select one (1832) of the entire album list (1830) being output to the first portion (A) may be applied in a state that the entire album list (1830) is output to the first portion (A), the screen information (1820) on an album including the first image (1810) is output to the second portion (B), and the first image (1810) is output to the third portion (C).

As a result, referring to FIG. 18B, the screen information (1840) on the selected album (1832) may be output to the second portion (B), and one (1834) of the images included in the selected album (1832) may be output to the third portion (C).

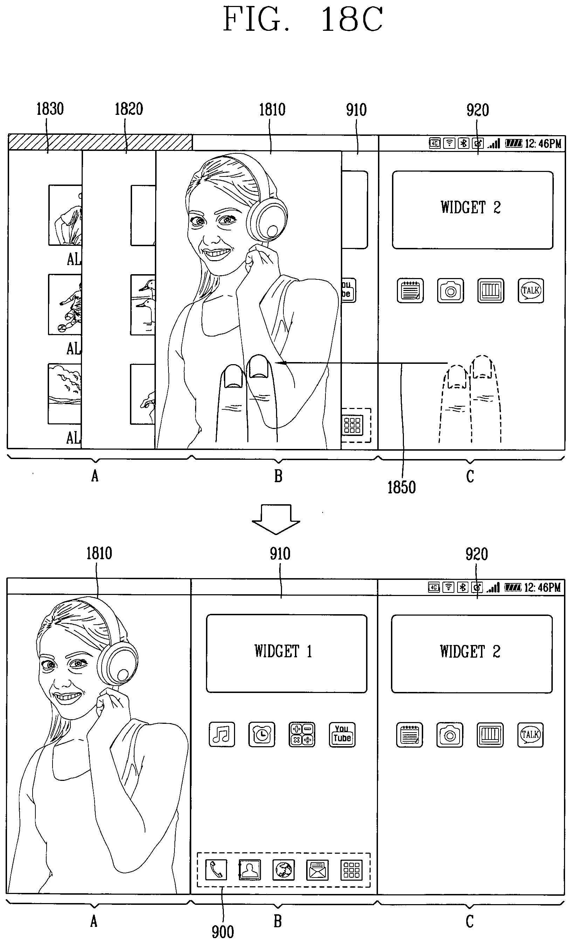

As another example, when a user touches and selects one of thumbnails of images being output to the second portion (B), an image of the selected thumbnail may be output to the third portion (C). Referring to FIG. 18C, a drag input (1850) may be applied using two fingers to the first image (1810) toward the first portion (A) in a state that the entire album list (1830) is output to the first portion (A), the screen information (1820) on the album including the first image (1810) is output to the second portion (B), and the first image (1810) is output to the third portion (C), as in FIG. 18A. As a result, the first image (1810), the screen information (1820) on the album including the first image (1810), and the entire album list (1830) may be sequentially overlapped with each other.

As a result, referring to FIG. 18C, the first image (1810) may be output to the first portion (A), and the first page (910) and the second page (920) of the home screen may be output to the second and third portions (B and C), respectively.

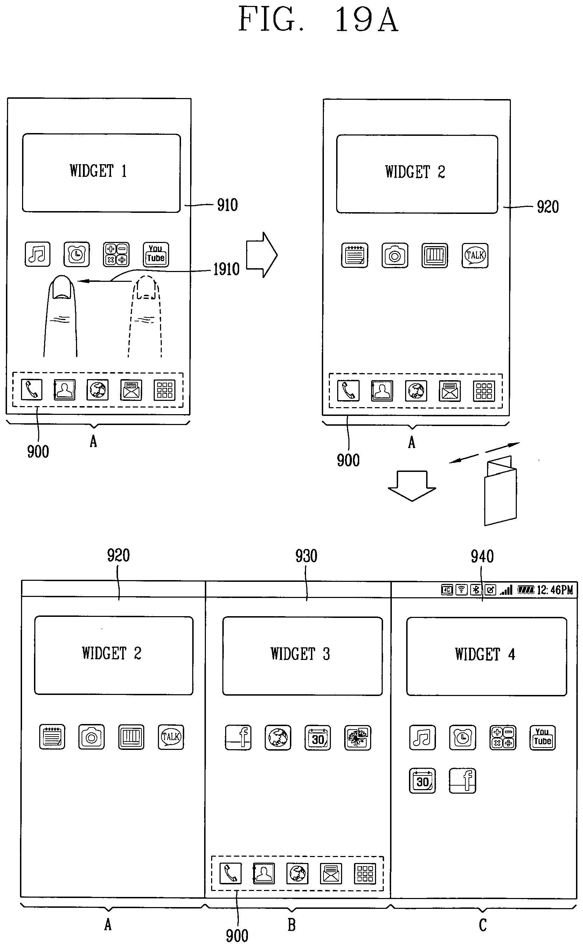

FIGS. 19A through 19C are views illustrating another embodiment in which screen information being output is controlled by an operation to unfold a folded display unit according to an embodiment of the present invention.

Referring to FIG. 19A, the first page (910) of a home screen which is preset screen information may be output to the first portion (A) in a state that the mobile terminal 100 is folded such that the first portion (A) is exposed to outside. Consecutively, a flicking input (1910) may be applied to the first page (910).

Referring to FIG. 19A, the second page (920) of a home screen may be output to the first portion (A) by the flicking input (1910). That is, the second page (920) may be output after the first page (910) according to the output order of the preset home screen page.

Referring to FIG. 19A, when an operation to unfold the folded portion of the mobile terminal 100 is sensed, the second page (920) which has been output before sensing of the opening operation may be output to the first portion (A). Further, the third page (930) may be output to the second portion (B) and the fourth page (940) may be output to the third portion (C) according to the preset order.

As a further example, the third page (930) of a home screen which is preset screen information may be output to the first portion (A) in a state that the mobile terminal 100 is folded such that the first portion (A) is exposed to outside. Consecutively, when an icon of an application which has been output to the third portion (C) is touched to be selected, the application may be executed on the first portion (A).

Thereafter, when an operation to unfold the folded portion of the mobile terminal 100 is sensed, the execution screen of the application and the pages of the home screen according to the preset order may be output.

As an example, the execution screen of the application may be continuously output to the first portion (A). And the fourth page (940) which has been preset as a next page of the third page (930) may be output to the second portion (B), and the fifth page (950) which has been preset as a next page of the fourth page (940) may be output to the third portion (C).

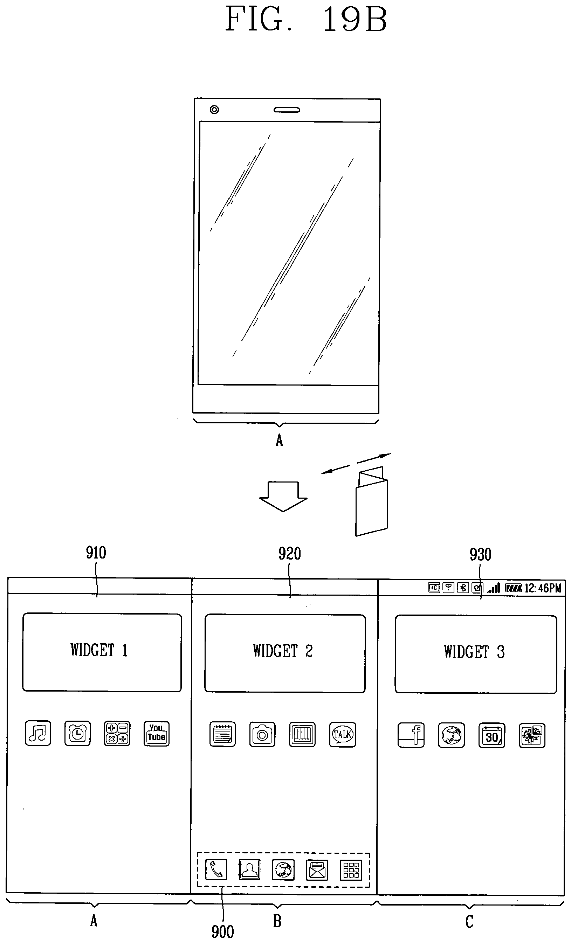

Referring to FIG. 19B, an operation to unfold the folded portion of the mobile terminal may be sensed in an 'OFF' state of the screen 151 of the mobile terminal 100 which has been folded such that the first portion (A) is exposed to outside.

Thus, referring to FIG. 19B, pages of the home screen may be output according to the preset order. As an example, the first page (910) may be output to the first portion (A), the second page (920) may be output to the second portion (B), and the third page (930) may be output to the third portion (C).

Meanwhile, when an operation to unfold the folded state so that the first, second and third portions (A, B and C) can be disposed toward the user is sensed, after a preset touch input is applied to at least one of the first boundary region (810a) and the second boundary region (810b), in a state that the first boundary region (810a) and the second boundary region (810b) are folded inward or outward so that only one of the first, second and third portions (A, B and C) can be disposed toward the user, the controller 180 may re-output each screen information which has been output to the first, second and third portions (A, B and C) before the folded state.

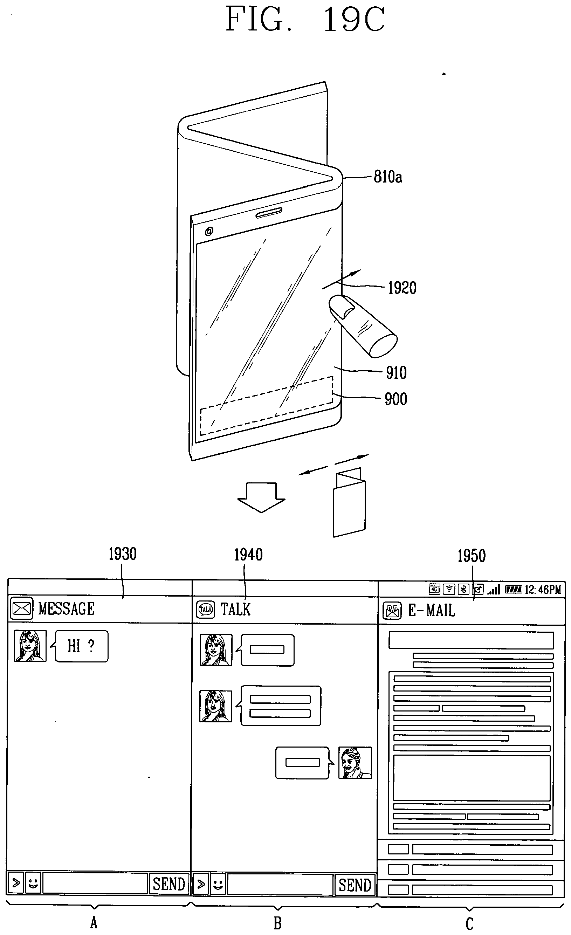

Referring to FIG. 19C, the first page (910) of the home screen which is preset screen information may be output to the first portion (A) in a state that the mobile terminal 100 is folded such that the first portion (A) is exposed to outside. Consecutively, a user may unfold the folded portion of the mobile terminal 100 by applying a slide input (1920) to the first boundary region (810a).

As a result, referring to FIG. 19C, screen information (1930, 1940, 1950) which have been output immediately before the mobile terminal 100 is folded may be re-output. As an example, execution screens (1930, 1940, 1950) of the application which have been executed before the mobile terminal 100 is folded may be re-output.

As described hereinbefore, according to the mobile terminal and the method for controlling the same in accordance with the present invention, it is possible to provide a new type of user convenience by controlling information being output to the display unit, based on a state conversion of a flexible display unit and a preset touch input.

Further, according to the mobile terminal and the method for controlling the same in accordance with the present invention, it is possible to provide a user-customized interface since a user can change a type of screen information to be displayed, according to a state conversion and a preset touch input.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

As the present features may be embodied in several forms without departing from the characteristics thereof, it should also be understood that the above-described embodiments are not limited by any of the details of the foregoing description, unless Alternatively specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal (100), comprising:
a flexible display (151) including a first portion (A), a second portion (B) rotatably positionable relative to the first portion (A), and a third portion (C) rotatably positionable relative to the second portion (B); and
a controller (180) configured to:
cause the display to display first screen information on at least one of the second portion (B), or the third portion (C), based on a touch input to at least one of the first portion (A), the second portion (B), or the third portion (C), and based on sensing of an operation to unfold a folded state so that the first, second and third portions (A, B, C) are disposed toward a user, cause the display to display as the first screen information an image (1810), which is included in an album, on the third portion (C), as a screen information (1820) on the second portion (B) thumbnail of images included in the album, including the first screen information, and as a screen information on the first portion (A), an entire album list (1830) including the album that includes the image, wherein in the folded state the first portion (A) is disposed toward the user and the first screen information is displayed on the first portion (A).

2. The mobile terminal of claim 1, wherein the controller is further configured to:
cause the display to display second screen information on at least one of the first portion (A), the second portion (B), or the third portion (C), based on sensing of rotation between at least one of the second portion (B) or the third portion (C), and the first portion (A).

3. The mobile terminal of claim 1 or 2, wherein the flexible display further includes a first boundary region (810a) formed at one side of the first portion (A) and one side of the second portion (B), and a second boundary region (810b) formed at one side of the second portion (B) and one side of the third portion (C); and wherein
the first boundary region facilitates relative rotational movement between the first portion (A) and the second portion (B); and
the second boundary region facilitates relative rotation movement between the second portion (B) and the third portion (C).

4. The mobile terminal of claims 1 to 3, wherein the controller is further configured to:
cause the display to terminate the displaying of the first screen information and display preset screen information on at least one of the first portion (A), the second portion (B), or the third portion (C), based on a touch input to at least one of the first portion (A), the second portion (B), or the third portion (C).

5. The mobile terminal of claims 1 to 4, wherein the first screen information comprises an object, and wherein the controller is further configured to:
execute a function corresponding to the object in response to a touch input received with regard to the object.

6. The mobile terminal of claim 5, wherein the controller is further configured to:
terminate the execution of the function in response to an input.

7. The mobile terminal of claims 1 to 6, wherein the first screen information comprises an object, and wherein the controller is further configured to:
move the object from one of the first portion (A), the second portion (B), or the third portion (C), to another one of the first portion (A), the second portion (B), or the third portion (C), in response to a touch input received with regard to the object.

8. The mobile terminal of claims 1 to 7, wherein the controller is further configured to:
cause the display to respectively display other screen information on each of the first portion (A), the second portion (B), and the third portion (C); and
cause the display to rearrange the respectively displayed screen information so that it is respectively displayed on other ones of the first portion (A), the second portion (B), and the third portion (C), based on a touch input to at least one of the first portion (A), the second portion (B), or the third portion (C).

9. The mobile terminal of claims 1 to 8, wherein the controller is further configured to:
cause the display to display second screen information and third screen information to respective portions among the first portion (A), the second portion (B), and the third portion (C), but not on a same portion on which the first screen information is displayed, wherein the displaying of the second screen information and the third screen information is based on a touch input to at least one of the first portion (A), the second portion (B), or the third portion (C).

10. The mobile terminal of claims 1 to 9, wherein the controller is further configured to:
cause the display to convert other screen information on each of the first portion (A), the second portion (B), and the third portion (C) sequentially, based on a continuous touch input to at least one of the first portion (A), the second portion (B), or the third portion (C).

11. A method for controlling a mobile terminal (100), the method comprising
sensing a touch input received to a flexible display (151) including a first portion (A), a second portion (B) rotatably positionable relative to the first portion (A), and a third portion (C) rotatably positionable relative to the second portion (B);
displaying first screen information on at least one of the second portion (B), or the third portion (C), based on a touch input to at least one of the first portion (A), the second portion (B), or the third portion (C); and based on sensing of an operation to unfold a folded state so that the first, second and third portions (A, B, C) are disposed toward a user, displaying as the first screen information an image (1810), which is included in an album, on the third portion (C), as a screen information (1820) on the second portion (B) thumbnail of images included in the album, including the first screen information, and as a screen information on the first portion (A), an entire album list (1830) including the album that includes the image, wherein in the folded state the first portion (A) is disposed toward the user and the first screen information is displayed on the first portion (A).

## Patentansprüche

1. Mobiles Endgerät (100), umfassend:
eine flexible Anzeige (151), der einen ersten Bereich (A), einen relativ zu dem ersten Bereich (A) drehbar positionierbaren zweiten Bereich (B) und einen relativ zu den zweiten Bereich (B) drehbar positionierbaren dritten Bereich (C) umfasst; und
eine Steuerung (180), die eingerichtet ist zum:
Veranlassen der Anzeige, erste Bildschirminformation auf dem zweiten Bereich (B) und/oder dem dritten Bereich (C) basierend auf einer Berührungseingabe auf mindestens dem ersten Bereich (A), dem zweiten Bereich (B) und/oder dem dritten Bereich (C) anzuzeigen, und
basierend auf einem Erkennen einer Betätigung zum Entfalten eines gefalteten Zustands, sodass die ersten, zweiten und dritten Bereiche (A, B, C) einem Benutzer zugewandt angeordnet sind, Veranlassen der Anzeige, in dem dritten Bereich (C) ein Bild (1810), das in einem Album enthalten ist, als die erste Bildschirminformation, Miniaturbilder, die in dem Album enthalten sind, als eine Bildschirminformation (1820) in dem zweiten Bereich (B), die die erste Bildschirminformation enthält, und eine gesamte Albumliste (1830), die das das Bild enthaltende Album enthält, als eine Bildschirminformation in dem ersten Bereich (A) anzuzeigen, wobei in dem gefalteten Zustand der erste Bereich (A) dem Benutzer zugewandt angeordnet ist, und die erste Bildschirminformation in dem ersten Bereich (A) angezeigt wird.

2. Mobiles Endgerät gemäß Anspruch 1, wobei die Steuerung des Weiteren eingerichtet ist zum:
Veranlassen der Anzeige eine zweite Bildschirminformation in mindestens dem ersten Bereich (A), dem zweiten Bereich (B) und/oder dem dritten Bereich (C) basierend auf einem Erkennen einer Drehung zwischen mindestens dem zweiten Bereich (B) und/oder dem dritten Bereich (C) und dem ersten Bereich (A) anzuzeigen.

3. Mobiles Endgerät gemäß Anspruch 1 oder 2, wobei die flexible Anzeige des Weiteren einen ersten Randbereich (810a), der an einer Seite des ersten Bereichs (A) und einer Seite des zweiten Bereichs (B) gebildet ist, und einen zweiten Randbereich (810b), der an einer Seite des zweiten Bereichs (B) und einer Seite des dritten Bereichs (C) gebildet ist, umfasst; und wobei
der erste Randbereich eine relative Rotationsbewegung zwischen dem ersten Bereich (A) und dem zweiten Bereich (B) ermöglicht; und
der zweite Randbereich eine relative Rotationsbewegung zwischen dem zweiten Bereich (B) und dem dritten Bereich (C) ermöglicht.

4. Mobiles Endgerät gemäß einem der Ansprüche 1 bis 3, wobei die Steuerung des Weiteren eingerichtet ist zum:
Veranlassen der Anzeige das Anzeigen der ersten Bildschirminformation zu beenden und eine voreingestellte Bildschirminformation in dem ersten Bereich (A), dem zweiten Bereich (B), und/oder dem dritten Bereich (C) basierend auf einer Berührungseingabe in dem ersten Bereich (A), dem zweiten Bereich (B) und/oder dem dritten Bereich (C) anzuzeigen.

5. Mobiles Endgerät gemäß einem der Ansprüche 1 bis 4, wobei die erste Bildschirminformation ein Objekt umfasst, und wobei die Steuerung des Weiteren eingerichtet ist zum:
Ausführen einer Funktion, die dem Objekt entspricht, in Erwiderung auf eine Berührungseingabe, die in Bezug auf das Objekt erhalten wurde.

6. Mobiles Endgerät gemäß Anspruch 5, wobei die Steuerung des Weiteren eingerichtet ist zum:
Beenden der Ausführung der Funktion in Erwiderung auf eine Eingabe.

7. Mobiles Endgerät gemäß einem der Ansprüche 1 bis 6, wobei die erste Bildschirminformation ein Objekt umfasst, und wobei die Steuerung des Weiteren eingerichtet ist zum:
Bewegen des Objekts von dem ersten Bereich (A), dem zweiten Bereich (B) oder dem dritten Bereich (C) zu einem anderen des ersten Bereichs (A), des zweiten Bereichs (B) und des dritten Bereichs (C) in Erwiderung auf eine Berührungseingabe, die in Bezug auf das Objekt erhalten wurde.

8. Mobiles Endgerät gemäß einem der Ansprüche 1 bis 7, wobei die Steuerung des Weiteren eingerichtet ist zum:
Veranlassen der Anzeige, eine jeweils andere Bildschirminformation auf jedem des ersten Bereichs (A), des zweiten Bereichs (B) und des dritten Bereichs (C) anzuzeigen; und
Veranlassen der Anzeige, die jeweilige angezeigte Bildschirminformation basierend auf einer Berührungseingabe in mindestens einem des ersten Bereichs (A), des zweiten Bereichs (B) und des dritten Bereichs (C) so neu anzuordnen, dass sie jeweils in einem anderen des ersten Bereichs (A) des zweiten Bereichs (B) und des dritten Bereichs (C) angezeigt wird.

9. Mobiles Endgerät gemäß einem der Ansprüche 1 bis 8, wobei die Steuerung des Weiteren eingerichtet ist zum:
Veranlassen der Anzeige, eine zweite Bildschirminformation und eine dritte Bildschirminformation in jeweiligen Bereichen aus dem ersten Bereich (A), dem zweiten Bereich (B) und dem dritten Bereich (C), jedoch nicht in einem gleichen Bereich, in dem die erste Bildschirminformation angezeigt wird, anzuzeigen, wobei das Anzeigen der zweiten Bildschirminformation und der dritten Bildschirminformation auf einer Berührungseingabe auf dem ersten Bereich (A), dem zweiten Bereich (B) und/oder dem dritten Bereich (C) basiert.

10. Mobiles Endgerät gemäß einem der Ansprüche 1 bis 9, wobei die Steuerung des Weiteren eingerichtet ist zum:
Veranlassen der Anzeige, eine andere Bildschirminformation auf jedem des ersten Bereichs (A), das zweiten Bereichs (B) und des dritten Bereichs (C) basierend auf einer anhaltenden Berührungseingabe in dem ersten Bereich (A), dem zweiten Bereich (B) und/oder dem dritten Bereich (C) fortlaufend anzuzeigen.

11. Verfahren zum Steuern eines mobilen Endgeräts (100), wobei das Verfahren umfasst:
Erkennen einer Berührungseingabe, die auf einer flexiblen Anzeige (151), die einen ersten Bereich (A), einen relativ zu dem ersten Bereich (A) drehbar positionierbaren zweiten Bereich (B) und einen relativ zu den zweiten Bereich (B) drehbar positionierbaren dritten Bereich (C) umfasst, erhalten wird;
Anzeigen einer ersten Bildschirminformation auf dem zweiten Bereich (B) und/oder dem dritten Bereich (C) basierend auf einer Berührungseingabe auf mindestens einem des ersten Bereichs (A), des zweiten Bereichs (B) und des dritten Bereichs (C); und
basierend auf dem Erkennen einer Betätigung zum Entfalten eines gefalteten Zustands, sodass die ersten, zweiten und dritten Bereiche (A, B, C) einem Benutzer zugewandt angeordnet sind, Anzeigen in dem dritten Bereich (C) eines Bildes (1810), das in einem Album enthalten ist, als die erste Bildschirminformation, Miniaturbilder, die in dem Album enthalten sind, als eine Bildschirminformation (1820) in dem zweiten Bereich (B), die die erste Bildschirminformation enthält, und eine gesamte Albumliste (1830), die das das Bild enthaltende Album enthält, als eine Bildschirminformation in dem ersten Bereich (A), wobei in dem gefalteten Zustand der erste Bereich (A) dem Benutzer zugewandt angeordnet ist, und die erste Bildschirminformation in dem ersten Bereich (A) angezeigt wird.

## Revendications

1. Terminal mobile (100), comprenant :
un écran flexible (151) comprenant une première partie (A), une deuxième partie (B) pouvant être positionnée de manière rotative par rapport à la première partie (A), et une troisième partie (C) pouvant être positionnée de manière rotative par rapport à la deuxième partie (B) ; et
une unité de commande (180) conçue pour :
amener l'écran à afficher des premières informations d'écran sur au moins une de la deuxième partie (B) ou de la troisième partie (C), sur la base d'une entrée tactile sur au moins une de la première partie (A), de la deuxième partie (B) ou de la troisième partie (C), et
sur la base de la détection d'une opération de déplier un état plié de sorte que les première, deuxième et troisième parties (A, B, C) sont disposées vers un utilisateur, amener l'écran à afficher une image (1810), qui est comprise dans un album, en tant que premières informations d'écran, sur la troisième partie (C), en tant qu'informations d'écran (1820) sur la deuxième partie (B) de miniature d'images comprises dans l'album, comprenant les premières informations d'écran, et en tant qu'informations d'écran sur la première partie (A), une liste entière d'albums (1830) comprenant l'album qui comprend l'image, dans lequel dans l'état plié la première partie (A) est disposée vers l'utilisateur et les premières informations d'écran sont affichées sur la première partie (A).

2. Terminal mobile selon la revendication 1, dans lequel l'unité de commande est conçue en outre pour :
amener l'écran à afficher des deuxièmes informations d'écran sur au moins une de la première partie (A), de la deuxième partie (B) ou de la troisième partie (C), sur la base de la détection d'une rotation entre au moins une de la deuxième partie (B) ou de la troisième partie (C), et la première partie (A).

3. Terminal mobile selon la revendication 1 ou 2, dans lequel l'écran flexible comprend en outre une première région de limite (810a) formée au niveau d'un côté de la première partie (A) et d'un côté de la deuxième partie (B), et une seconde région de limite (810b) formée au niveau d'un côté de la deuxième partie (B) et d'un côté de la troisième partie (C) ; et dans lequel
la première région de limite facilite un mouvement relatif de rotation entre la première partie (A) et la deuxième partie (B) ; et
la seconde région de limite facilite un mouvement relatif de rotation entre la deuxième partie (B) et la troisième partie (C).

4. Terminal mobile selon les revendications 1 à 3, dans lequel l'unité de commande est conçue en outre pour :
amener l'écran à achever l'affichage des premières informations d'écran et à afficher des informations d'écran prédéfinies sur au moins une de la première partie (A), de la deuxième partie (B) ou de la troisième partie (C), sur la base d'une entrée tactile sur au moins une de la première partie (A), de la deuxième partie (B) ou de la troisième partie (C).

5. Terminal mobile selon les revendications 1 à 4, dans lequel les premières informations d'écran comprennent un objet, et dans lequel l'unité de commande est conçue en outre pour :
exécuter une fonction correspondant à l'objet en réponse à une entrée tactile reçue par rapport à l'objet.

6. Terminal mobile selon la revendication 5, dans lequel l'unité de commande est conçue en outre pour :
achever l'exécution de la fonction en réponse à une entrée.

7. Terminal mobile selon les revendications 1 à 6, dans lequel les premières informations d'écran comprennent un objet, et l'unité de commande étant conçue en outre pour :
déplacer l'objet d'une de la première partie (A), de la deuxième partie (B) ou de la troisième partie (C), vers une autre de la première partie (A), de la deuxième partie (B) ou de la troisième partie (C), en réponse à une entrée tactile reçue par rapport à l'objet.

8. Terminal mobile selon les revendications 1 à 7, dans lequel l'unité de commande est conçue en outre pour :
amener l'écran à afficher respectivement d'autres informations d'écran sur chacune de la première partie (A), de la deuxième partie (B) et de la troisième partie (C) ; et
amener l'écran à ré-agencer les informations d'écran affichées respectivement de sorte qu'elles sont affichées respectivement sur d'autres parmi la première partie (A), la deuxième partie (B) et la troisième partie (C), sur la base d'une entrée tactile sur au moins une de la première partie (A), de la deuxième partie (B) ou de la troisième partie (C).

9. Terminal mobile selon les revendications 1 à 8, dans lequel l'unité de commande est conçue en outre pour :
amener l'écran à afficher des deuxièmes informations d'écran et des troisièmes informations d'écran sur les parties respectives parmi la première partie (A), la deuxième partie (B) et la troisième partie (C), mais pas sur une même partie sur laquelle les premières informations d'écran sont affichées, l'affichage des deuxièmes informations d'écran et des troisièmes informations d'écran étant basé sur une entrée tactile sur au moins une de la première partie (A), de la deuxième partie (B) ou de la troisième partie (C).

10. Terminal mobile selon les revendications 1 à 9, dans lequel l'unité de commande est conçue en outre pour :
amener l'écran à convertir d'autres informations d'écran sur chacune de la première partie (A), de la deuxième partie (B) et de la troisième partie (C) séquentiellement, sur la base d'une entrée tactile continue sur au moins une de la première partie (A), de la deuxième partie (B) ou de la troisième partie (C).

11. Procédé permettant de commander un terminal mobile (100), le procédé consistant à :
détecter une entrée tactile reçue sur un écran flexible (151) comprenant une première partie (A), une deuxième partie (B) pouvant être positionnée de manière rotative par rapport à la première partie (A), et une troisième partie (C) pouvant être positionnée de manière rotative par rapport à la deuxième partie (B) ;
afficher des premières informations d'écran sur au moins une de la deuxième partie (B) ou de la troisième partie (C), sur la base d'une entrée tactile sur au moins une de la première partie (A), de la deuxième partie (B) ou de la troisième partie (C) ; et
sur la base de la détection d'une opération de déplier un état plié de sorte que les première, deuxième et troisième parties (A, B, C) sont disposées vers un utilisateur, afficher en tant que premières informations d'écran une image (1810), qui est comprise dans un album, sur la troisième partie (C), en tant qu'informations d'écran (1820) sur la deuxième partie (B) de miniature d'images comprises dans l'album, comprenant les premières informations d'écran, et en tant qu'informations d'écran sur la première partie (A), une liste entière d'albums (1830) comprenant l'album qui comprend l'image, dans lequel dans l'état plié la première partie (A) est disposée vers l'utilisateur et les premières informations d'écran sont affichées sur la première partie (A).
